(19) Europäisches Patentamt
European Patent Office
Office européen des brevets

(11) **EP 4 787 922 A1**

(12) **EUROPEAN PATENT APPLICATION**
published in accordance with Art. 153(4) EPC

(43) Date of publication:
**05.08.2026 Bulletin 2026/32**

(21) Application number: **24870587.3**

(22) Date of filing: **20.09.2024**

(51) International Patent Classification (IPC):
***H04W 16/06*** (2009.01)

(52) Cooperative Patent Classification (CPC):
**H04W 16/06; H04W 72/1263; H04W 72/1268**

(86) International application number:
**PCT/CN2024/119920**

(87) International publication number:
**WO 2025/067043 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311272466**

(71) Applicant: **Vivo Mobile Communication Co., Ltd.
Dongguan, Guangdong 523863 (CN)**

(72) Inventors:
• ZHOU, Tong
Dongguan, Guangdong 523863 (CN)
• WU, Hao
Dongguan, Guangdong 523863 (CN)
• SHI, Yuan
Dongguan, Guangdong 523863 (CN)

(74) Representative: **Lavoix
Bayerstraße 83
80335 München (DE)**

(54) **INFORMATION REPORTING METHOD AND APPARATUS, INFORMATION REPORTING CONFIGURATION METHOD AND APPARATUS, AND RELATED DEVICE**

(57) This application discloses an information reporting method and apparatus, an information reporting configuration method and apparatus, and a related device, belonging to the field of communication technology. The information reporting method according to an embodiment of this application includes: sending, by a terminal, first information to a network-side device; receiving, by the terminal, a report configuration from the network-side device, where the report configuration is associated with the first information; and reporting or not reporting, by the terminal, a first information report based on the report configuration, where the first information report includes information obtained based on AI processing.

A terminal sends first information to a network-side device — 201

The terminal receives a reporting configuration from the network-side device, where the reporting configuration is associated with the first information — 202

The terminal reports or does not report a first information report based on the reporting configuration — 203

FIG. 2

**Description**

**CROSS-REFERENCE TO RELATED APPLICATIONS**

This application claims priority to Chinese Patent Application No. 202311272466.2, filed on September 27, 2023, which is incorporated herein by reference in its entirety.

**TECHNICAL FIELD**

This application pertains to the field of communication technology, and specifically relates to an information reporting method and apparatus, an information reporting configuration method and apparatus, and a related device.

**BACKGROUND**

With the continuous development of artificial intelligence (Artificial Intelligence, AI) technology, more and more processing tasks can be handled through AI models, for example, AI-based channel state information (Channel State Information, CSI) prediction, AI-based CSI compression, AI-based beam management, and AI-based positioning. However, terminal processing capability reporting in the related art cannot effectively support resource and timing requirements for information reporting obtained based on AI processing, for example, CSI reporting obtained based on AI processing or positioning-related information reporting obtained based on AI processing, affecting reliability of information reporting obtained based on AI processing.

**SUMMARY**

Embodiments of this application provide an information reporting method and apparatus, an information reporting configuration method and apparatus, and a related device, to provide a network-side device with capability information related to reporting of information obtained based on AI processing on a terminal side, so that the network side can configure, for the terminal side based on the capability information related to the reporting of information obtained based on AI processing on the terminal side, reporting of information obtained based on AI processing. This can reduce the occurrence of situations that a terminal fails to report information obtained based on AI processing due to the AI processing-based information reporting configured by the network-side device exceeding a capability of the terminal, thereby improving reliability of the terminal for reporting information obtained based on AI processing.

According to a first aspect, an information reporting method is provided, where the method includes:

sending, by a terminal, first information to a network-side device;
receiving, by the terminal, a report configuration from the network-side device, where the report configuration is associated with the first information; and
reporting or not reporting, by the terminal, a first information report based on the report configuration, where the first information report includes information obtained based on artificial intelligence AI processing; where
the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first information report belongs to the second information report, the first processing unit is configured for information computation, the second processing unit is configured for AI model-related processing, and the third processing unit is configured for information computation and AI model-related processing.

According to a second aspect, an information reporting apparatus is provided, where the apparatus includes:

a first sending module configured to send first information to a network-side device;
a first receiving module configured to receive a report configuration from the network-side device, where the report configuration is associated with the first information; and
a reporting module configured to report or not report a first information report based on the report configuration, where the first information report includes information obtained based on artificial intelligence AI processing; where
the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first information report belongs to the second information report, the first processing unit is configured for information computation, the second processing unit is configured for AI model-related processing, and the third processing unit is configured for information computation and AI model-related processing.

According to a third aspect, an information reporting configuration method is provided, where the method includes:

receiving, by a network-side device, first information from a terminal; and
sending, by the network-side device, a report configuration to the terminal, where the report configuration is associated with the first information; where
the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first processing unit is configured for information computation, the second processing unit is configured for AI model-related processing, and the third processing unit is configured for information computation and AI model-related processing.

According to a fourth aspect, an information reporting configuration apparatus is provided, where the apparatus includes:

a second receiving module configured to receive first information from a terminal; and
a second sending module configured to send a report configuration to the terminal, where the report configuration is associated with the first information; where

the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first processing unit is configured for information computation, the second processing unit is configured for AI model-related processing, and the third processing unit is configured for information computation and AI model-related processing.

According to a fifth aspect, a terminal is provided, where the terminal includes a processor and a memory, the memory stores a program or instructions capable of running on the processor, and the program or instructions, when executed by the processor, implement the steps of the method according to the first aspect.

According to a sixth aspect, a terminal is provided, including a processor and a communication interface, where the communication interface is configured to: send first information to a network-side device; receive a report configuration from the network-side device, where the report configuration is associated with the first information; and report or not report a first information report based on the report configuration, where the first information report includes information obtained based on artificial intelligence AI processing; where

the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first information report belongs to the second information report, the first processing unit is configured for information computation, the second processing unit is configured for AI model-related processing, and the third processing unit is configured for information computation and AI model-related processing.

According to a seventh aspect, a network-side device is provided, where the network-side device includes a processor and a memory, the memory storing a program or instructions capable of running on the processor, and the program or instructions, when executed by the processor, implement the steps of the method according to the third aspect.

According to an eighth aspect, a network-side device is provided, including a processor and a communication interface, where the communication interface is configured to: receive first information from a terminal; and send a report configuration to the terminal, where the report configuration is associated with the first information; where

the first information is used to determine at least one of the following:

the number of first processing units required to generate a second information report;
the number of first processing units available in the terminal;
the number of second processing units required to generate the second information report;

the number of second processing units available in the terminal;

the number of third processing units required to generate the second information report;

the number of third processing units available in the terminal;

an occupation duration of the second processing unit;

an occupation duration of the third processing unit;

the maximum number of active resources that the terminal is able to support per unit time;

a first delay associated with the second information report, where the first delay is associated with an end time of measurement resources corresponding to the second information report; and

a second delay associated with the second information report, where the second delay is associated with an end time of reception of triggering signaling for the second information report; where

the second information report is information obtained based on AI processing, the first processing unit is configured for information computation, the second processing unit is configured for AI model-related processing, and the third processing unit is configured for information computation and AI model-related processing.

According to a ninth aspect, an information reporting system is provided, including: a terminal and a network-side device, where the terminal may be configured to perform the steps of the information reporting method according to the first aspect, and the network-side device may be configured to perform the steps of the information reporting configuration method according to the third aspect.

According to a tenth aspect, a readable storage medium is provided, where the readable storage medium stores a program or instructions, and the program or instructions, when executed by a processor, implement the steps of the method according to the first aspect, or implement the steps of the method according to the third aspect.

According to an eleventh aspect, a chip is provided, where the chip includes a processor and a communication interface, the communication interface is coupled to the processor, and the processor is configured to run a program or instructions to implement the steps of the method according to the first aspect, or to implement the steps of the method according to the third aspect.

According to a twelfth aspect, a computer program/program product is provided, where the computer program/-program product is stored in a storage medium, and the computer program/program product is executed by at least one processor to implement the steps of the method according to the first aspect, or to implement the steps of the method according to the third aspect.

In the embodiments of this application, a terminal sends first information to a network-side device; the terminal receives a report configuration from the network-side device, where the report configuration is associated with the first information; and the terminal reports or does not report a first information report based on the report configuration, where the first information report includes information obtained based on AI processing. That is, in the embodiments of this application, the terminal provides the network-side device with capability information related to reporting of information obtained based on AI processing on a terminal side, that is, the first information, so that the network side can configure reporting of information obtained based on AI processing for the terminal side based on the capability information related to the reporting of information obtained based on AI processing on the terminal side. This can reduce the occurrence of situations that the terminal fails to report information obtained based on AI processing due to the AI processing-based information reporting configured by the network-side device exceeding a capability of the terminal, thereby improving reliability of the terminal for reporting information obtained based on AI processing.

## BRIEF DESCRIPTION OF DRAWINGS

FIG. 1 is a block diagram of a wireless communication system to which embodiments of this application are applicable;

FIG. 2 is a flowchart of an information reporting method according to an embodiment of this application;

FIG. 3 is a first schematic diagram between reporting time and delay according to an embodiment of this application;

FIG. 4 is a second schematic diagram between reporting time and delay according to an embodiment of this application;

FIG. 5 is a flowchart of an information reporting configuration method according to an embodiment of this application;

FIG. 6 is a structural diagram of an information reporting apparatus according to an embodiment of this application;

FIG. 7 is a structural diagram of an information reporting configuration apparatus according to an embodiment of this application;

FIG. 8 is a structural diagram of a communication device according to an embodiment of this application;

FIG. 9 is a structural diagram of a terminal according to an embodiment of this application; and

FIG. 10 is a structural diagram of a network-side device according to an embodiment of this application.

**DETAILED DESCRIPTION OF EMBODIMENTS**

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in this application are used to distinguish between similar objects rather than to describe a specific order or sequence. It should be understood that terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited, for example, there may be one or more first objects. In addition, "or" in this application represents at least one of connected objects. For example, "A or B" covers three schemes, that is, scheme 1: including A and not including B; scheme 2: including B and not including A; and scheme 3: including both A and B. The character "/" generally indicates that the associated objects have an "or" relationship.

The term "indication" in this application may be a direct indication (or explicit indication) or an indirect indication (or implicit indication). A direct indication may be understood as a sender explicitly informing a receiver of content such as specific information, an operation to be performed, or a request result in a sent indication; an indirect indication may be understood as a receiver determining corresponding information based on an indication sent by a sender, or making a judgment and determining an operation to be performed, a request result, or the like based on a judgment result.

It should be noted that technologies described in the embodiments of this application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" are often used interchangeably in the embodiments of this application. The technologies described may be used in the above-mentioned systems and radio technologies as well as other systems and radio technologies. In the following descriptions, a new radio (New Radio, NR) system is described for illustration purpose, and NR terms are used in most of the following descriptions, although these technologies may also be applied to other systems than an NR system, for example, the 6th generation (6th Generation, 6G) communication system.

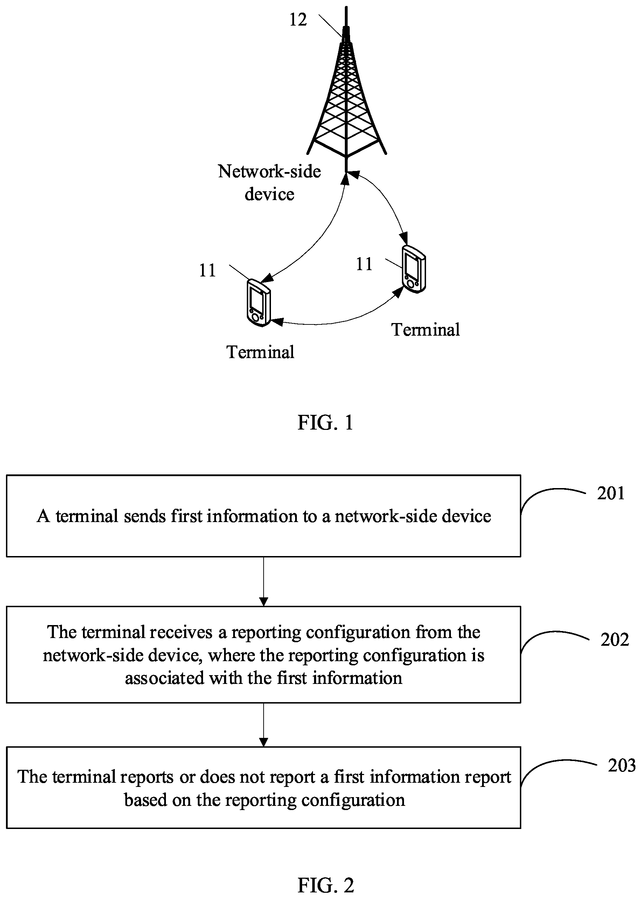

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR) or virtual reality (Virtual Reality, VR) device, a robot, a wearable device (Wearable Device), a flight vehicle (flight vehicle), vehicle user equipment (Vehicle User Equipment, VUE), ship-borne equipment, pedestrian user equipment (Pedestrian User Equipment, PUE), smart household (home devices with wireless communication functions, such as refrigerators, televisions, washing machines, or furniture), a game console, a personal computer (Personal Computer, PC), a teller machine, or a self-service machine. The wearable device includes a smartwatch, a smart band, smart earphones, smart glasses, smart jewelry (a smart bracelet, a smart band, a smart ring, a smart necklace, a smart leglet, a smart anklet, and the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that the terminal 11 is not limited to a specific type in the embodiments of this application. The network-side device 12 may include an access network device or a core network device. The access network device can also be called a radio access network (Radio Access Network, RAN) device, a wireless access network function, or a wireless access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (Node B, NB), an evolved NodeB (Evolved Node B, eNB), a next generation NodeB (the next generation Node B, gNB), a new radio NodeB (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home Node B, HNB), a home evolved NodeB (home evolved Node B), a transmission reception point (Transmission Reception Point, TRP), or other suitable terms in the field. Provided that the same technical effect is achieved, the base station is not limited to specific technical terms. It should be noted that in the embodiments of this application, only the base station in the NR system is used as an example for description, but the specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), a unified data management (Unified Data Management, UDM), a unified data repository (Unified Data Repository, UDR), a Home Subscriber Server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in the embodiments of this application, only the core network device in the NR system is used as an example for description, but the specific type of the core network device is not limited.

For ease of understanding, the following describes some contents involved in the embodiments of this application.

I. Number of channel state information (Channel State Information, CSI) processing units

In CSI processing, a CSI processing unit (CSI Processing Unit, CPU) is a processing unit used for CSI computation. Specifically, user equipment (User Equipment, UE) can report to a network the number of CSI computations that can be supported simultaneously on one carrier or multiple carriers. If one UE supports $N_{CPU}$ simultaneous CSI computations, it means that the UE has $N_{CPU}$ CSI processing units for processing CSI reporting.

A capability of the UE for processing CSI reports, that is, the number of supported simultaneous CSI computations $N_{CPU}$, needs to be reported to the network. If one UE supports $N_{CPU}$ simultaneous CSI computations, it means that the UE has $N_{CPU}$ CSI processing units for processing CSI reports of all configured cells.

For the number of available CPUs, if L CPUs are already occupied for calculation of CSI reports in a given orthogonal frequency division multiplexing (Orthogonal Frequency Division Multiplexing, OFDM) symbol, the UE has $N_{CPU}$ - L unoccupied CPUs. If $N$ CSI reports starts occupying their respective CPUs on this OFDM symbol, where each CSI report $n = 0, ..., N$ - 1 corresponds to $O_{CPU}^{(n)}$ CPUs, and the number of available CPUs may be less than the number of CPUs needed to be occupied by $N$ CSI reports, the UE does not need to update $N$ - $M$ requested CSI reports with the lowest priority, where $0 \leq M \leq N$ is a maximum value such that $\sum_{n=0}^{M-1} O_{CPU}^{(n)} \leq N_{CPU} - L$ holds.

The number of CPUs occupied by CSI reports $O_{CPU}$ can be as shown in Table 1. For a CSI report with the report quantity (reportQuantity) set to none (none) and with tracking reference signal (Tracking Reference Signal, TRS) information configured (that is, trs-Info configured), $O_{CPU}$ is 0; for a CSI report with the report quantity set to CSI-RS resource indicator (CSI-RS Resource Indicator, cri)-reference signal received power (Reference Signal Received Power, RSRP), synchronization signal block (Synchronous Signal Block, ssb)-index (Index)-RSRP, cri-signal to interference plus noise ratio (Signal to Interference Plus Noise Ratio, SINR), ssb-Index-RSRP, cri-SINR, ssb-Index-SINR, or none, and with TRS information not configured (that is, trs-Info not configured), $O_{CPU}$ is 1; for a CSI report with the report quantity set to cri-rank indicator (Rank Indicator, RI)-precoding matrix indicator (Precoding Matrix Indicator, PMI)-channel quality indicator (Channel Quality Indicator, CQI), cri-RI-i1, cri-RI-i1-CQI, cri-RI-CQI, or cri-RI-layer indicator (Layer Indicator, LI)-PMI-CQI, if the CSI reporting is aperiodically triggered without transmitting a physical uplink shared channel (Physical Uplink Shared Channel, PUSCH) with uplink data or hybrid automatic repeat request (Hybrid Automatic Repeat reQuest, HARQ) acknowledgment (HARQ-ACK) when L=0 CPUs are occupied, where the CSI corresponds to a single CSI with wideband frequency-granularity and to at most 4 CSI-RS ports in a single resource without CRI report and where the codebook type (codebookType) is set to 'type1-SinglePanel' or where reportQuantity is set to 'cri-RI-CQI', then $O_{CPU}$ is $N_{CPU}$; otherwise, $O_{CPU}$ is $K_s$, where i1 is a wideband (Wideband) indicator, L represents the number of currently used CPUs, $K_s$ is the number of CSI-RS resources (CSI-RS resource) included in a channel state information reference signal (Channel State Information Reference Signal, CSI-RS) resource set (CSI-RS resource set) for channel measurement.

**TABLE 1**

| reportQuantity (reportQuantity) | Others (Others) | $O_{CPU}$ |
|---|---|---|
| None (none) (trs-Info configured) | | 0 |

(continued)

| reportQuantity (reportQuantity) | Others (Others) | $O_{CPU}$ |
|---|---|---|
| cri-RSRP<br>ssb-Index-RSRP<br>cri-SINR<br>ssb-Index-SINR<br>none (trs-Info not configured) | | 1 |
| cri-RI-PMI-CQI<br>cri-RI-i1<br>cri-RI-i1-CQI<br>cri-RI-CQI<br><br>cri-RI-LI-PMI-CQI | The CSI reporting is aperiodically triggered without transmitting a PUSCH with uplink data or HARQ-ACK when L=0 CPUs are occupied, where the CSI corresponds to a single CSI with wideband frequency-granularity and to at most 4 CSI-RS ports in a single resource without CRI report and where codebookType is set to 'typeI-Single-Panel' or where reportQuantity is set to 'cri-RI-CQI'.<br>(A-CSI, and w/o UL-SCH or HARQ-ACK, and L=0 (no CPU occupied), and single WB CSI, and<=4 CSI-RS ports w/o CRI, and Type-I codebook, or cri-RI-CQI) | $N_{CPU}$ |
| | Other cases (otherwise) | $K_s$ |

For CPU occupation duration, the start and end OFDM symbols occupied by CSI reports can be as shown in Table 2.

**TABLE 2**

| | Start symbol | End symbol |
|---|---|---|
| P/SP CSI (except case 1) and *reportQuantity* is not none | The earliest symbol within the CSI-RS/CSI-IM/SSB transmission occasion for the most recent channel or interference measurement prior to the corresponding CSI reference resource | The last symbol of the PUSCH/PUCCH that transmits CSI |
| A-CSI and case 1, *and reportQuantity* is not none | The first symbol following the PDCCH that triggers the CSI report | The last symbol of the PUSCH that transmits CSI |
| SP-CSI (except case 1), and *reportQuantity* is none, and *trs-Info* is not configured | The earliest symbol of the most recent P/SP CSI-RS/SSB resource transmission used for L1-RSRP computation | $Z_3'$ symbols following the last symbol of the most recent CSI-RS/SSB resource transmission used for L1-RSRP computation |
| AP-CSI, and *reportQuantity* is none, and *trs-Info* is not configured | The first symbol following the PDCCH that triggers the CSI report | The last symbol between $Z_3$ symbols after the first symbol following the PDCCH and $Z_3'$ symbols after the last symbol of the most recent CSI-RS/SSB resource transmission used for L1-RSRP computation |

Case 1 in Table 2 includes the following:

initial transmission of a physical uplink shared channel (Physical Uplink Sharing Channel, PUSCH)-based semi-persistent (Semi-Persistent CSI, SP-CSI) report, activated by physical downlink control channel (Physical Downlink Control Channel, PDCCH);

in any slot, the number of active CSI-RS ports or active CSI-RS resources in the active bandwidth part (Bandwidth Part, BWP) of a UE does not exceed the capability reported by the UE.

A non-zero power CSI-RS (None Zero Power CSI-RS, NZP CSI-RS) resource is in an active state during the following time periods:

for aperiodic CSI-RS, from the end of the PDCCH containing the request until the end of the PUSCH for the aperiodic CSI-RS;
for semi-persistent CSI-RS, from the end of application of the activation command until the end of application of the deactivation command; and
for periodic CSI-RS, from when the periodic CSI-RS is configured by higher layer signaling until the periodic CSI-RS configuration is released.

It should be noted that if one CSI-RS resource is associated N times with one or more CSI report settings, the CSI-RS resource and the CSI-RS ports within the CSI-RS resource are counted N times.

II. CSI processing delay

Aperiodic CSI reporting is CSI reporting triggered by downlink control information (Downlink Control Information, DCI). Then the CSI reporting time needs to be no earlier than Z and Z', where Z is a delay starting from the end of the last symbol of the PDCCH that triggers the CSI reporting; and Z' is a delay starting from the end of the measurement resource.
If the CSI reporting time starts earlier than the end of the last symbol of the PDCCH triggering the CSI reporting + Z, or earlier than the end of the measurement resource + Z', the UE does not perform the corresponding CSI update and reporting.
The following details an information reporting method and an information reporting configuration method according to the embodiments of this application with reference to the accompanying drawings through some embodiments and application scenarios thereof.
Referring to FIG. 2, FIG. 2 is a flowchart of an information reporting method according to an embodiment of this application. The method may be performed by a terminal. As shown in FIG. 2, the method includes the following steps.
Step 201: The terminal sends first information to a network-side device.
Step 202: The terminal receives a report configuration from the network-side device, where the report configuration is associated with the first information.
Step 203: The terminal reports or does not report a first information report based on the report configuration, where the first information report includes information obtained based on artificial intelligence AI processing.
The first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first information report belongs to the second information report, the first processing unit is configured for information computation, the second processing unit is configured for AI model-related processing, and the third processing unit is configured for information computation and AI model-related processing.

In this embodiment, the second information report is information obtained based on AI processing. For example, the second information report may include but is not limited to at least one of CSI obtained based on AI processing and positioning-related information obtained based on AI processing, where the CSI obtained based on AI processing may include but is not limited to at least one of beam prediction-related information obtained based on AI processing, CSI prediction-related information obtained based on AI processing, CSI compression-related information obtained based on AI processing, and the like.
The first information report may include part or all of the second information report. For example, if the second information report includes beam prediction-related information obtained based on AI processing and CSI prediction-related information obtained based on AI processing, the first information report may include at least one of beam prediction-related information obtained based on AI processing and CSI prediction-related information obtained based on AI processing. It can be understood that the first information report can be configured by the report configuration.

The first processing unit is configured for information computation, and the information computation may be information computation unrelated to an AI model. For example, for CSI reporting, the first processing unit may be a processing unit used for CSI computation. In some optional embodiments, for CSI reporting, the first processing unit can be called a CSI processing unit (that is, CPU).

The second processing unit is configured for AI model-related processing, for example, a processing unit used for processing such as data collection, data processing, AI model inference, AI model training, and AI model monitoring. In some optional embodiments, the second processing unit can be called an AI processing unit (AI Processing Unit, APU). It should be noted that the being used for AI model-related processing can also be called being used for AI model-related operations or computations, or can be called being used for AI-related processing or operations or computations, or can be called being used for AI functionality-related processing or operations or computations, or the like.

The third processing unit is configured for information computation and AI model-related processing, that is, the third processing unit can be configured for information computation unrelated to an AI model, and can also be configured for AI model-related processing. In some optional embodiments, for CSI reporting, the third processing unit can be called a CSI processing unit or an AI processing unit.

The first delay is associated with the end time of the measurement resource related to the information reporting, that is, the first delay is a delay after the end time of the measurement resource related to the information reporting.

The second delay is associated with the end time of reception of the triggering signaling for information reporting, that is, the second delay is a delay after the end time of reception of the triggering signaling for information reporting.

For example, the terminal reports the first information to the network-side device, and the network-side device can determine the report configuration based on the first information and send it to the terminal, so that the terminal can determine, based on the report configuration, whether to report the first information report. For example, if the first information report (for example, CSI Report) configured by the network-side device does not exceed the capability of the terminal, the terminal can report a valid first information report; if the first information report configured by the network-side device exceeds the capability of the terminal, the terminal may not report the first information report, or may not update the first information report. In a case that the terminal does not update the first information report, the terminal can continue to report the first information report, but the content of the first information report is not updated. For example, the terminal can report the inference result of the previous reporting, or report a default inference result.

According to the information reporting method in the embodiments of this application, the terminal provides the network-side device with capability information related to reporting of information obtained based on AI processing on the terminal side, that is, the first information, so that the network side can configure reporting of information obtained based on AI processing for the terminal side based on the capability information related to reporting of information obtained based on AI processing on the terminal side. This can reduce the occurrence of situations that the terminal fails to report information obtained based on AI processing due to the AI processing-based information reporting configured by the network-side device exceeding the capability of the terminal, thereby improving reliability of the terminal for reporting information obtained based on AI processing.

Optionally, that the terminal reports or does not report a first information report based on the report configuration includes:

in a case that at least one of the following is satisfied, not updating, by the terminal, the first information report, or not reporting, by the terminal, the first information report:

the number of first processing units available in the terminal is less than the number of first processing units required to generate the first information report;
the number of second processing units available in the terminal is less than the number of second processing units required to generate the first information report; and
the number of third processing units available in the terminal is less than the number of third processing units required to generate the first information report; where
the number of first processing units, second processing units, or third processing units required to generate the first information report is determined based on the report configuration.

In this embodiment, in a case that the terminal does not update the first information report, the terminal can report the first information report that is not updated. In a case that the terminal does not report the first information report, the terminal may not perform related processing of the first information report. For example, if the first information report is a CSI report, the terminal may not perform AI-based CSI processing.

The number of first processing units, second processing units, or third processing units required to generate the first information report can be determined based on the report configuration. For example, the number of first processing units required to generate the first information report can be determined based on second information indicated by the report configuration, the number of second processing units required to generate the first information report can be determined based on third information indicated by the report configuration, and the number of third processing units required to generate the first information report can be determined based on sixth information indicated by the report configuration.

In some optional embodiments, in a case that the number of first processing units available in the terminal is greater than or equal to the number of first processing units required to generate the first information report, and the number of second processing units available in the terminal is greater than or equal to the number of second processing units required to generate the first information report, the terminal can report a valid information report; or in a case that the number of third processing units available in the terminal is greater than or equal to the number of third processing units required to generate the first information report, the terminal can report a valid information report.

Optionally, the number of first processing units required to generate the first information report is determined based on second information indicated by the report configuration, where the second information includes at least one of the following:

aperiodic measurement resource related information;
AI functionality or AI model related configuration information;
first indication information, used for indicating a report quantity of CSI report, where the first information report is a CSI report; and
second indication information, used for indicating a codebook type associated with CSI reporting, where the first information report is a CSI report.

In this embodiment, the aperiodic measurement resource related information may include but is not limited to at least one of the following: the number of time instances associated with an aperiodic measurement resource, the number of reference signals associated with an aperiodic measurement resource set, and the number of aperiodic measurement resource sets.

The AI functionality or AI model may be an AI functionality or AI model associated with the first information report. For example, if the first information report is a CSI report, the AI functionality may be an AI functionality used for generating the CSI report, and the AI model may be an AI model used for generating the CSI report. For example, the AI functionality or AI model related configuration information may include but is not limited to at least one of the following: the number of first sets, the number of reference signal resources associated with the first set, the number of time instances associated with the first set, the number of subbands associated with the first set, the number of ports associated with the first set, the number of beams associated with the first set, the number of second sets, the number of reference signals associated with the second set, the number of beams associated with the second set, the number of time instances associated with the second set, the number of frequency domain units associated with the second set, the number of subbands associated with the second set, and the number of ports associated with the second set; where the first set is a set corresponding to input of an AI model associated with the first information report, and the second set is a set corresponding to output of the AI model associated with the first information report.

It should be noted that the AI functionality can be used to define the usage of a group of AI models. For example, the AI functionality may include but is not limited to at least one of a beam prediction function, a CSI prediction function, a positioning function, and the like.

In a case that the first information report is a CSI report, the second information may include first indication information, used for indicating a report quantity (reportQuantity) of CSI report, where the report quantity of the CSI report may include but is not limited to predicted cri-RSRP, predicted ssb-Index-RSRP, predicted cri-SINR, predicted ssb-Index-RSRP, predicted cri-SINR, predicted ssb-Index-SINR, predicted cri-RI-PMI-CQI, predicted cri-RI-i1, predicted cri-RI-i1-CQI, predicted cri-RI-CQI, predicted cri-RI-LI-PMI-CQI, or the like.

In a case that the first information report is a CSI report, the second information may include second indication information, used for indicating a codebook type associated with the CSI report, for example, type I (that is, type I) or type II (that is, type II).

Optionally, the number of first processing units required to generate the first information report is determined based on the second information and fourth information, where the fourth information includes at least one of the following:

the number of AI models used for an AI functionality;
a first coefficient, where the first coefficient is related to a capability of the terminal; and
AI functionality or AI model related configuration information.

In this embodiment, the target AI functionality can be understood as an AI functionality associated with the first information report. The first coefficient is related to the capability of the terminal, for example, the first coefficient may be related to a capability of the terminal unrelated to the AI model. In some optional embodiments, for periodic/semi-static reference signals and aperiodic reference signals, the first coefficient can use different values. The semi-static reference signal can also be called a semi-persistent reference signal.

It can be understood that in a case that the second information includes AI functionality or AI model related configuration information, the third information may not include the AI functionality or AI model related configuration information; in a case that the third information includes AI functionality or AI model related configuration information, the second information may not include the AI functionality or AI model related configuration information.

Optionally, the number of first processing units required to generate the first information report is calculated based on the following formula:

$$O_1 = y * L_1$$

where $O_1$ represents the number of first processing units required to generate the first information report, $y$ represents the first coefficient, and $L_1$ represents a first factor, where the first factor is determined based on the second information, or the first factor is determined based on information, other than the first coefficient, in the second information and the third information.

Optionally, the number of second processing units required to generate the first information report is determined based on fourth information indicated by the report configuration, where the fourth information includes at least one of the following:

aperiodic measurement resource related information;
AI functionality or AI model related configuration information;
indication information used for indicating an AI functionality;
an AI model identifier;
a dataset identifier, where a dataset identified by the dataset identifier is an AI functionality or AI model related dataset;
indication information used for indicating a lifecycle stage of an AI model or an AI functionality; and
indication information used for indicating a monitoring indicator of an AI model.

In this embodiment, the aperiodic measurement resource related information may include but is not limited to at least one of the following: the number of time instances associated with an aperiodic measurement resource, the number of reference signals associated with an aperiodic measurement resource set, and the number of aperiodic measurement resource sets.

The AI functionality or AI model may be an AI functionality or AI model associated with the first information report. For example, if the first information report is a CSI report, the AI functionality may be an AI functionality used for generating the CSI report, and the AI model may be an AI model used for generating the CSI report. For example, the AI functionality or AI model related configuration information may include but is not limited to at least one of the following: the number of first sets, the number of reference signal resources associated with the first set, the number of time instances associated with the first set, the number of subbands associated with the first set, the number of ports associated with the first set, the number of beams associated with the first set, the number of second sets, the number of reference signals associated with the second set, the number of beams associated with the second set, the number of time instances associated with the second set, the number of frequency domain units associated with the second set, the number of subbands associated with the second set, and the number of ports associated with the second set; where the first set is a set corresponding to input of an AI model associated with the first information report, and the second set is a set corresponding to output of the AI model associated with the first information report.

The indication information used to indicate an AI functionality may be used to indicate the AI functionality associated with the first information report.

The indication information used to indicate a lifecycle stage of an AI model or an AI functionality may be used to indicate a lifecycle stage of the AI model or AI functionality associated with the first information report. The lifecycle stage may include a model inference stage, a model monitoring stage, or the like.

The indication information used to indicate a monitoring indicator of an AI model may be used to indicate a monitoring indicator of the AI model associated with the first information report. The monitoring indicator may include a monitoring key performance indicator (Key Performance Indicators, KPI), such as a cosine similarity squared or maximum accuracy (that is, top1 accuracy).

Optionally, the number of second processing units required to generate the first information report is determined based on the third information and fifth information, where the fifth information includes at least one of the following:

the number of AI models used for an AI functionality;

a second coefficient, where the second coefficient is related to a capability of the terminal;

AI functionality or AI model related configuration information;

indication information used for indicating an AI functionality;

an AI model identifier; and

a dataset identifier, where a dataset identified by the dataset identifier is an AI functionality or AI model related dataset.

In this embodiment, the second coefficient is related to a capability of the terminal, for example, the second coefficient is related to a capability of the terminal for AI model-related processing. The AI model-related processing may include but is not limited to at least one of AI model input preprocessing, AI model inference, and AI model post-processing.

It can be understood that in a case that the fourth information includes at least one of the AI functionality or AI model related configuration information, indication information used for indicating an AI functionality, and AI model identifier, the fifth information may not include the corresponding parameter; in a case that the fifth information includes at least one of the AI functionality or AI model related configuration information, indication information used for indicating an AI functionality, and AI model identifier, the fourth information may not include the corresponding parameter.

Optionally, the number of third processing units required to generate the first information report is determined based on sixth information indicated by the report configuration, where the sixth information includes at least one of the following:

indication information used for indicating an AI functionality;

an AI model identifier;

AI functionality or AI model related configuration information;

a dataset identifier, where a dataset identified by the dataset identifier is an AI functionality or AI model related dataset;

indication information used for indicating a lifecycle stage of an AI model or an AI functionality;

indication information used for indicating a monitoring indicator of an AI model; and

aperiodic measurement resource related information.

In this embodiment, the indication information used to indicate an AI functionality may be used to indicate the AI functionality associated with the first information report.

The AI functionality or AI model related configuration information may be the AI functionality or AI model associated with the first information report. For example, if the first information report is a CSI report, the AI functionality may be an AI functionality used for generating the CSI report, and the AI model may be an AI model used for generating the CSI report. For example, the AI functionality or AI model related configuration information may include but is not limited to at least one of the following: the number of first sets, the number of reference signal resources associated with the first set, the number of time instances associated with the first set, the number of subbands associated with the first set, the number of ports associated with the first set, the number of beams associated with the first set, the number of second sets, the number of reference signals associated with the second set, the number of beams associated with the second set, the number of time instances associated with the second set, the number of frequency domain units associated with the second set, the number of subbands associated with the second set, and the number of ports associated with the second set; where the first set is a set corresponding to input of an AI model associated with the first information report, and the second set is a set corresponding to output of the AI model associated with the first information report.

The indication information used to indicate a lifecycle stage of an AI model or an AI functionality may be to indicate a lifecycle stage of the AI model or AI functionality associated with the first information report. The lifecycle stage may include a model inference stage, a model monitoring stage, or the like.

The indication information used to indicate a monitoring indicator of an AI model may be used to indicate a monitoring indicator of the AI model associated with the first information report. The monitoring indicator may include a monitoring KPI, such as a cosine similarity squared or top1 accuracy.

The aperiodic measurement resource related information may include but is not limited to at least one of the following: the number of time instances associated with an aperiodic measurement resource, the number of reference signals associated with an aperiodic measurement resource set, and the number of aperiodic measurement resource sets.

Optionally, the number of third processing units required to generate the first information report is determined based on the sixth information and seventh information, where the seventh information includes at least one of the following:

the number of AI models used for an AI functionality;

a first coefficient, where the first coefficient is related to a capability of the terminal;

a second coefficient, where the second coefficient is related to a capability of the terminal;

a third coefficient, where the third coefficient is related to a capability of the terminal;
indication information used for indicating an AI functionality;
an AI model identifier;
AI functionality or AI model related configuration information; and
a dataset identifier, where a dataset identified by the dataset identifier is an AI functionality or AI model related dataset.

It can be understood that in a case that the sixth information includes at least one of the AI functionality or AI model related configuration information, indication information used for indicating an AI functionality, dataset identifier, and AI model identifier, the seventh information may not include the corresponding parameter; in a case that the seventh information includes at least one of the AI functionality or AI model related configuration information, indication information used for indicating an AI functionality, dataset identifier, and AI model identifier, the sixth information may not include the corresponding parameter.

Optionally, the number of third processing units required to generate the first information report is determined based on one of the following formulas:

$$O_2 = N_1 + N_2;$$

$$O_2 = N_1 * k_1;$$

$$O_2 = N_1 * k_1 + N_2;$$

$$O_2 = N_1{}^{k_1};$$

$$O_2 = N_1{}^{k_1} + N_2;$$

$$O_2 = N_2 * k_2;$$

$$O_2 = N_2 * k_2 + N_1;$$

$$O_X = N_2{}^{k_2};$$

$$O_2 = N_2{}^{k_2} + N_1;$$

$$O_2 = N_2 * k_2 + N_1 * k_1;$$

and

$$O_2 = k_2(N_2 + N_1);$$

where

$O_2$ represents the number of third processing units required to generate the first information report, $N_1$ represents a second factor, where the second factor is related to the number of first processing units required to generate the first information report; $N_2$ represents a third factor, where the third factor is related to the number of second processing units required to generate the first information report; and $k_1$ represents a third coefficient, $k_2$ represents a second coefficient, and the second coefficient and the third coefficient are each related to a capability of the terminal;

the second factor is determined based on at least one of the following:

aperiodic measurement resource related information;
AI functionality or AI model related configuration information; and

a first coefficient, where the first coefficient is related to a capability of the terminal; and

the third factor is determined based on at least one of the following:

indication information used for indicating an AI functionality;
an AI model identifier;
AI functionality or AI model related configuration information;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model; and
aperiodic measurement resource related information.

The following takes CSI reporting as an example to illustrate this embodiment.

Scenario 1: enhancing the CSI processing unit. In this scenario, the CSI processing unit can be used for CSI computation, and can also be used for AI model-related processing, that is, the third processing unit is a CSI processing unit.

Specifically, if it is determined that the number of CSI processing units required for AI-based CSI reporting is greater than the number of CSI processing units available in the terminal, the terminal may not update the AI-based CSI reporting, that is, not update the first information report, or may not report the first information report, that is, the terminal does not perform AI-based CSI reporting. The number of CSI processing units required for the AI-based CSI reporting may be determined based on at least one of the following:

indication information used for indicating an AI functionality;
an AI model identifier;
AI functionality or AI model related configuration information;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model;
aperiodic measurement resource related information;
the number of AI models used for a first AI functionality;
a first coefficient, where the first coefficient is related to a capability of the terminal;
a second coefficient, where the second coefficient is related to a capability of the terminal; and
a third coefficient, where the third coefficient is related to a capability of the terminal.

Scenario 2: The AI processing unit can be used for CSI computation, and can also be used for AI model-related processing, that is, the third processing unit is an AI processing unit.

Specifically, if it is determined that the number of AI processing units required for AI-based CSI reporting is greater than the number of AI processing units available in the terminal, the terminal may not update the AI-based CSI reporting, that is, not update the first information report, or may not report the first information report, that is, the terminal does not perform AI-based CSI reporting. The number of AI processing units required for the AI-based CSI reporting may be determined based on at least one of the following:

indication information used for indicating an AI functionality;
an AI model identifier;
AI functionality or AI model related configuration information;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model;
aperiodic measurement resource related information;
the number of AI models used for a first AI functionality;
a first coefficient, where the first coefficient is related to a capability of the terminal;
a second coefficient, where the second coefficient is related to a capability of the terminal; and
a third coefficient, where the third coefficient is related to a capability of the terminal.

Optionally, the first information includes eighth information, where the eighth information is used to determine the number of first processing units, second processing units, or third processing units required to generate the second information report; and

the eighth information includes at least one of the following:

AI functionality or AI model related configuration information;

the number of AI models used for an AI functionality;

indication information used for indicating an AI functionality;

an AI model identifier;

a dataset identifier, where a dataset identified by the dataset identifier is an AI functionality or AI model related dataset;

indication information used for indicating a lifecycle stage of an AI model or an AI functionality;

indication information used for indicating a monitoring indicator of an AI model;

a first coefficient, where the first coefficient is related to a capability of the terminal;

a second coefficient, where the second coefficient is related to a capability of the terminal; and

a third coefficient, where the third coefficient is related to a capability of the terminal.

In this embodiment, the AI functionality or AI model may be an AI functionality or AI model associated with the second information report. For example, the AI functionality or AI model related configuration information may include but is not limited to at least one of the following: the number of first sets, the number of reference signal resources associated with the first set, the number of time instances associated with the first set, the number of subbands associated with the first set, the number of ports associated with the first set, the number of beams associated with the first set, the number of second sets, the number of reference signals associated with the second set, the number of beams associated with the second set, the number of time instances associated with the second set, the number of frequency domain units associated with the second set, the number of subbands associated with the second set, and the number of ports associated with the second set; where the first set is a set corresponding to input of an AI model associated with the second information report, and the second set is a set corresponding to output of the AI model associated with the second information report.

The number of AI models used for an AI functionality may be the number of AI models used for each AI functionality associated with the second information report.

The indication information used to indicate an AI functionality may be used to indicate the AI functionality associated with the second information report.

The AI model identifier may be an identifier of the AI model associated with the second information report.

The dataset identified by the dataset identifier may be a dataset related to the AI functionality or AI model associated with the second information report.

The indication information used to indicate a lifecycle stage of an AI model or an AI functionality may be used to indicate a lifecycle stage of the AI model or AI functionality associated with the second information report. The lifecycle stage may include a model inference stage, a model monitoring stage, or the like.

The indication information used to indicate a monitoring indicator of an AI model may be used to indicate a monitoring indicator of an AI model associated with the second information report. The monitoring indicator may include a monitoring KPI, such as a cosine similarity squared or top1 accuracy.

For the first coefficient, second coefficient, and third coefficient, reference may be made to the relevant descriptions in the foregoing embodiments.

For example, in a case that the network-side device receives the eighth information, the network-side device can calculate, based on the eighth information, at least one of the number of first processing units required to generate a second information report, the number of second processing units required to generate the second information report, and the number of third processing units required to generate the second information report.

In some optional embodiments, the number of processing units to be occupied by each AI functionality, AI model, or AI configuration may be predefined by a protocol, for example, the number of first processing units, second processing units, or third processing units to be occupied by each AI functionality, AI model, or AI configuration can be predefined by the protocol; or a related parameter used for determining the number of first processing units, the number of second processing units, or the number of third processing units may be predefined in advance.

Optionally, the occupation duration of the second processing unit or the third processing unit is determined based on at least one of the following:

a first occupation duration, where the first occupation duration is an occupation duration of the first processing unit;

AI functionality or AI model activation signaling;

AI functionality or AI model deactivation signaling;

AI functionality or AI model switching signaling;

a start time of input data collection associated with an AI functionality or an AI model;

an end time of output data report associated with an AI functionality or an AI model;

a measurement resource associated with an AI functionality or an AI model; and

triggering signaling of the first information report.

In this embodiment, the activation signaling is used to activate an AI functionality or AI model. The deactivation signaling is used to deactivate an AI functionality or AI model. The switching signaling is used to switch an AI functionality or AI model. For example, switching signaling is used to deactivate the first AI model and activate the second AI model, and then a start time of the occupation duration of the second AI model starts from receiving of the switching signaling. For example, the occupation duration of the second processing unit or third processing unit may be from the time when the AI functionality or AI model is activated through the activation signaling to the time when the AI functionality or AI model is deactivated through the deactivation signaling. Alternatively, the occupation duration of the second processing unit or third processing unit may be from the time when the AI functionality or AI model is activated through the activation signaling to the time when the AI functionality or AI model is switched through the switching signaling. For example, switching signaling is used to deactivate the second AI model and activate the third AI model, and then an end time of the occupation duration of the second AI model starts from receiving of the switching signaling. Alternatively, the occupation duration of the second processing unit or third processing unit may be from the time when the AI functionality or AI model is switched through the switching signaling to the time when the AI functionality or AI model is deactivated through the deactivation signaling.

As for the measurement resource associated with an AI functionality or an AI model: for example, for positioning-related information reporting, the measurement resources associated with an AI functionality or an AI model is a positioning reference signal (positioning reference signal, PRS) measurement resource or a CSI-RS measurement resource; for beam prediction-related information reporting, the measurement resource associated with an AI functionality or an AI model is a CSI-RS measurement resource or an SSB measurement resource; for CSI prediction-related information reporting or CSI compression-related information reporting, the measurement resource associated with an AI functionality or an AI model is a CSI-RS measurement resource.

The triggering signaling for information reporting is used to trigger information reporting. For example, the triggering signaling may be downlink control information (Downlink Control Information, DCI), a media access control control element (Media Access Control Control Element, MAC CE), or the like.

It can be understood that, in a case that the occupation duration of the second processing unit or the third processing unit is the occupation duration of the second processing unit or third processing unit associated with the first information report, the occupation duration of the first processing unit may be the occupation duration of the first processing unit associated with the first information report, and the AI functionality or AI model may be an AI functionality or AI model associated with the first information report.

Optionally, the occupation duration of the second processing unit or the third processing unit is the first occupation duration;

or

the occupation duration of the second processing unit is determined based on the first occupation duration and N time elements, where N is a positive integer.

In one implementation, the occupation duration of the second processing unit or the third processing unit is the same as the occupation duration of the first processing unit, that is, AI model-related processing does not additionally occupy time.

In another implementation, the occupation duration of the second processing unit is determined based on the first occupation duration and N time elements, for example, the occupation duration of the second processing unit extends from N time elements before the start of the first occupation duration until the end of the first information report reporting. The time elements can be appropriately set according to actual situations, such as slots, symbols, or seconds. N can be determined based on the terminal capability.

Optionally, a start time of the occupation duration of the second processing unit or the third processing unit is one of the following:

a time when activation signaling triggers an AI functionality or an AI model;
a time when switching signaling triggers an AI functionality or an AI model;
a time when DCI triggers the first information report;
a time when a MAC CE triggers the first information report; and
a start time of a measurement resource associated with an AI functionality or an AI model.

Optionally, an end time of the occupation duration of the second processing unit or the third processing unit is one of the following:

a time when deactivation signaling turns off an AI functionality or an AI model;
a time when switching signaling turns off an AI functionality or an AI model; and
an end time of reporting of the first information report.

It can be understood that, in a case that the occupation duration of the second processing unit or third processing unit is the second processing unit or third processing unit associated with the first information report, the AI functionality or AI model is an AI functionality or AI model associated with the first information report.

Optionally, the first information report includes at least one of CSI and positioning-related information, where the positioning-related information includes at least one of the following: position information of the terminal, and a positioning measurement quantity.

The positioning measurement quantity may include at least one of the following:

line of sight (Line of Sight, LOS) or non-line of sight (Non Line of Sight, NLOS);
measurement timing;
a measurement angle;
a measurement probability; and
a channel impulse response (Channel Impulse Response, CIR).

For example, positioning scenario 1 (case1) and positioning scenario 2a (case2a) are both sub-cases that model inference is performed on the UE side. For the positioning scenario 1, the UE performs direct AI/machine learning (Machine Learning, ML) positioning; for the positioning scenario 2a, the UE performs assisted positioning, and the location management function (Location Management Function, LMF) generates the final positioning result. In other words, in positioning scenario 1, the UE directly reports the UE position; in positioning scenario 2a, the UE reports the indirect result of positioning: a new measurement quantity or enhancement of existing measurement quantities, such as LOS/NLOS identification, measurement timing, a measurement angle, or a measurement probability.

Optionally, the reporting or not reporting, by the terminal, a first information report based on the report configuration includes:

in a case that any one of the following is satisfied, not updating, by the terminal, the first information report, or not reporting, by the terminal, the first information report:

a time of reporting the first information report starts earlier than a first time; and
a time of reporting the first information report starts earlier than a second time; where
the reporting time of the first information report is determined based on the report configuration; the first time is determined based on a first reference time and a first delay associated with the first information report, and the first reference time is an end time of measurement resources corresponding to the first information report; and the second time is determined based on a second reference time and a second delay associated with the first information report, and the second reference time is an end time of reception of triggering signaling for the first information report by the terminal.

For example, the second reference time may be an end time of the terminal's reception of the PDCCH that triggers the first information report. The first delay and second delay associated with the first information report may be determined based on a delay required for computing the information associated with the first information report and a delay required for AI model-related processing associated with the first information report.

In some optional embodiments, the first time may be a time delayed backward from the first reference time by the first delay associated with the first information report, and the second time may be a time delayed backward from the second reference time by the second delay associated with the first information report.

Specifically, in a case that any one of the time of reporting the first information report starting earlier than the first time and the time of reporting the first information report starting earlier than the second time is satisfied, the terminal does not update the first information report, or the terminal does not report the first information report, where in a case that the terminal does not update the first information report, the terminal may report the information report that is not updated; in a case that the terminal does not report the first information report, the terminal may not perform related processing of the first information report, for example, if the first information report is CSI obtained based on AI processing, the terminal may not perform AI-based CSI processing.

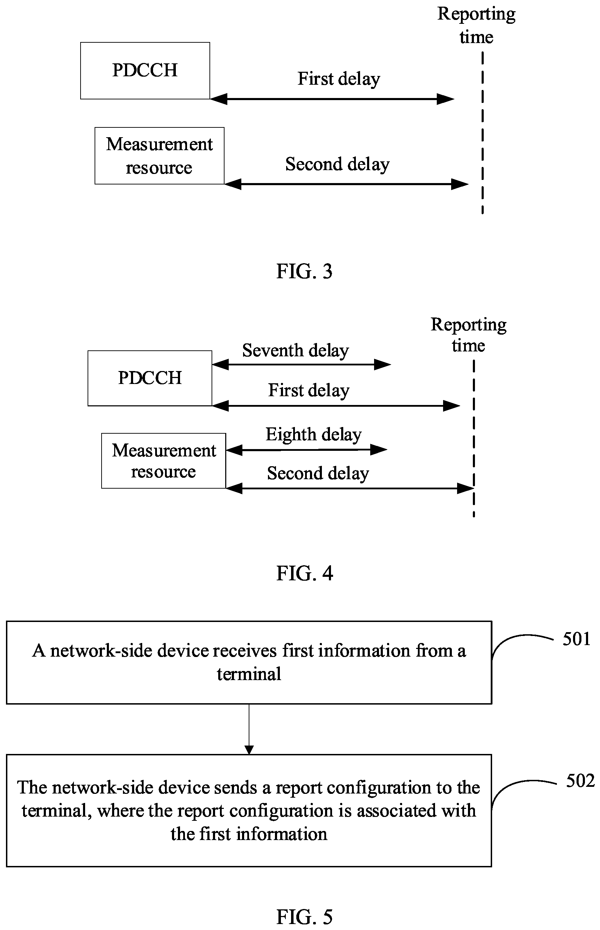

In some optional embodiments, in a case that the time of reporting the first information report starts not earlier than the first time and the time of reporting the first information report starts not earlier than the second time, the terminal may report a valid first information report, for example, as shown in FIG. 3.

Optionally, the first delay associated with the first information report is determined based on a third delay associated with the first information report and a fourth delay associated with the first information report, where the third delay associated with the first information report is a first computation delay associated with the first reference time, the first computation delay is a delay used for information computation, the fourth delay associated with the first information report is a first AI processing delay associated with the first reference time, and the first AI processing delay is a delay used for AI model-related processing;
or

the second delay associated with the first information report is determined based on a fifth delay associated with the first information report and a sixth delay associated with the first information report, where the fifth delay associated with the first information report is a second computation delay associated with the second reference time, the second computation delay is a delay used for information computation, the sixth delay is a second AI processing delay associated with the second reference time, and the second AI processing delay is a delay used for AI model-related processing.

In this embodiment, the third delay associated with the first information report is a first computation delay used for information computation, and the first computation delay is a computation delay after the first reference time. The fourth delay associated with the first information report is a first AI processing delay used for AI model-related processing, and the first AI processing delay is a computation delay after the first reference time. For example, the first delay associated with the first information report may be a sum of the third delay associated with the first information report and the fourth delay associated with the first information report.

The fifth delay associated with the first information report is a second computation delay used for information computation, and the second computation delay is a computation delay after the second reference time. The sixth delay associated with the first information report is a second AI processing delay used for AI model-related processing, and the second AI processing delay is a computation delay after the second reference time. For example, the second delay associated with the first information report may be a sum of the fifth delay associated with the first information report and the sixth delay associated with the first information report.

It should be noted that the first computation delay and second computation delay can be understood as delays unrelated to AI model-related processing, for example, the first computation delay and second computation delay may be communication processing related delays. The communication processing related delay may include at least one of a data collection delay, report information generation delay (for example, a PUSCH generation delay), a parsing delay of triggering signaling for information reporting, and the like.

In some optional embodiments, values of the fourth delay and the sixth delay may be the same.

In some optional embodiments, the second computation delay may be Z in the related art, and the first computation delay may be Z' in the related art. For example, values of Z and Z' can be as shown in Table 3 and Table 4 below, where $Z_1$ to $Z_3$ represent different requirements.

Specifically, if $max\{\mu PDCCH, \mu CSI\text{-}RS, \mu UL\} \leq 3$, and in the case of L = 0 CPU occupied, there is no PUSCH with a transport block or HARQ-ACK during triggering of CSI, and the CSI to be transmitted is a single CSI, and corresponds to the wideband frequency granularity, where the CSI corresponds to at most 4 CSI-RS ports in a single resource without requiring a CRI report, where CodebookType is set to "typeI-SinglePanel" or reportQuantity is set to "cri-RI-CQI", then $(Z_1, Z'_1)$ in Table 3 apply;

if the CSI to be transmitted corresponds to the wideband frequency granularity, where the CSI corresponds to at most 4 CSI-RS ports in a single resource without requiring a CRI report, and CodebookType is set to "typeI-SinglePanel" or reportQuantity is set to "cri-RI-CQI", then $(Z_1, Z'_1)$ in Table 4 apply;
if the CSI to be transmitted corresponds to the wideband frequency granularity, where reportQuantity is set to "ssb-Index-SINR" or "cri-SINR", then $(Z_1, Z'_1)$ in Table 4 apply;
if reportQuantity is set to "cri-RSRP" or "ssb-Index-RSRP", then $(Z_3, Z'_3)$ in Table 4 apply, where $X\mu$ is defined based on the UE-reported capability beamReportTiming, and $KB_1$ is defined based on the UE-reported capability beamSwitchTiming (beamSwitchTiming);
otherwise, $(Z_2, Z'_2)$ in Table 4 apply.

$\mu$ in Table 3 and Table 4 corresponds to $min(\mu PDCCH, \mu CSI\text{-}RS, \mu UL)$, where $\mu PDCCH$ corresponds to a subcarrier spacing of a PDCCH transmitting DCI, $\mu UL$ corresponds to a subcarrier spacing of a PUSCH transmitting a CSI report, and $\mu CSI\text{-}RS$ corresponds to a minimum subcarrier spacing of a DCI-triggered aperiodic CSI-RS.

$X_0$ to $X_6$ are defined based on the UE-reported capability beamReportTiming (beamReportTiming), and $KB_1$ to $KB_4$ are defined based on the UE-reported capability beamSwitchTiming.

TABLE 3 INFORMATION COMPUTATION DELAY FOR REQUIREMENT 1

| $\mu$ | $Z_1$ [symbols] | |
| --- | --- | --- |
| | $Z_1$ | $Z'_1$ |
| 0 | 10 | 8 |
| 1 | 13 | 11 |
| 2 | 25 | 21 |
| 3 | 43 | 36 |

**TABLE 4 INFORMATION COMPUTATION DELAY FOR REQUIREMENT 2**

| $\mu$ | $Z_1$ [symbols] | | $Z_2$ [symbols] | | $Z_3$ [symbols] | |
|---|---|---|---|---|---|---|
| | $Z_1$ | $Z'_1$ | $Z_2$ | $Z'_2$ | $Z_3$ | $Z'_3$ |
| 0 | 22 | 16 | 40 | 37 | 22 | $X_0$ |
| 1 | 33 | 30 | 72 | 69 | 33 | $X_1$ |
| 2 | 44 | 42 | 141 | 140 | $\min(44, X_2 + KB_1)$ | $X_2$ |
| 3 | 97 | 85 | 152 | 140 | $\min(97, X_3 + KB_2)$ | $X_3$ |
| 5 | 388 | 340 | 608 | 560 | $\min(388, X_5 + KB_3)$ | $X_5$ |
| 6 | 776 | 680 | 1216 | 1120 | $\min(776, X_6 + KB_4)$ | $X_6$ |

In some optional embodiments, when the number of time instances associated with the first set is greater than 1, and the measurement resource is an aperiodic CSI-RS, the second computation delay may be: T = Z + 14*(K-1)*m; where

T represents the second computation delay; Z represents Z in the related art, which is used to represent a delay when the number of time instances of the first set is 1 and CSI reporting is performed without prediction; K is the number of time instances of the aperiodic CSI-RS; and m is the number of slots between two adjacent aperiodic CSI-RS time instances. That is, the second computation delay in this embodiment is an extended Z.

In some optional embodiments, when the number of time instances of the first set is greater than 1, and the measurement resource is a periodic CSI-RS or a semi-persistent CSI-RS, the second computation delay may be: T = Z + w; where

T represents the second computation delay; and Z represents Z in the related art, which is used to represent a delay when the number of time instances of the first set is 1 and CSI reporting is performed without prediction. w is determined based on the number of CSI-RS time instances that need to be measured after the trigger for CSI reporting is received, and w is reported by the UE to the network-side device. That is, the second computation delay in this embodiment is an extended Z.

In some optional embodiments, when the number of time instances of the first set is greater than 1, and the measurement resource is an aperiodic CSI-RS, the fifth delay may be: T = Z + 14*(K-1)*m + r; where

T represents the second computation delay; Z represents Z in the related art, which is used to represent a delay when the number of time instances of the first set is 1 and CSI reporting is performed without prediction; K is the number of time instances of the aperiodic CSI-RS; m is the number of slots between two adjacent aperiodic CSI-RS time instances; and r is related to the number of time instances of the second set, or is a predefined value. An indication of r is reported by the UE to the network-side device. That is, the second computation delay in this embodiment is an extended Z.

In some optional embodiments, when the number of time instances of the first set is greater than 1, and the measurement resource is a periodic CSI-RS or a semi-persistent CSI-RS, the fifth delay may be: T= Z + w + r; where

T represents the second computation delay; Z represents Z in the related art, which is used to represent a delay when the number of time instances of the first set is 1 and CSI reporting is performed without prediction; w is determined by the number of CSI-RS time instances that need to be measured after the trigger for CSI reporting is received, and w is reported by the UE to the network-side device. r is related to the number of time instances of the second set, or is a predefined value. An indication of r is reported by the UE to the network-side device. That is, the second computation delay in this embodiment is an extended Z.

Optionally, the first target delay is calculated based on one of the following formulas:

$$t_\alpha = t_\beta + t_\gamma;$$

$$t_\alpha = t_\beta * t_\gamma;$$

and

$$t_\alpha = t_\beta{}^{t_\gamma};$$

where

$t_\alpha$ represents the first target delay; and in a case that the first target delay is the first delay associated with the first information report, $t_\beta$ represents the third delay associated with the first information report, and $t_\gamma$ represents the fourth

delay associated with the first information report; or in a case that the target delay is the second delay associated with the first information report, $t_\beta$ represents the fifth delay associated with the first information report, and $t_\gamma$ represents the sixth delay associated with the first information report.

In some optional embodiments, a calculation formula used for calculating the first delay associated with the first information report based on the third delay associated with the first information report and the fourth delay associated with the first information report may be predefined by a protocol or configured by the network-side device, or a calculation formula used for calculating the first delay associated with the first information report based on the third delay associated with the first information report and the fourth delay associated with the first information report may be determined based on the report configuration.

Optionally, the first information includes third indication information, where the third indication information is used to indicate a second target delay, and the second target delay includes a fourth delay associated with the second information report or a sixth delay associated with the second information report.

For example, the third indication information may include the second target delay.

Optionally, the third indication information includes at least one first delay mapping relationship, where the first delay mapping relationship is a mapping relationship between ninth information and the second target delay; and the ninth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model.

In this embodiment, the AI functionality or AI model may be an AI functionality or AI model associated with the second information report.

Optionally, the second target delay includes at least one of the following:

a preprocessing delay of input data of an AI model;
an inference delay of an AI model; and
a post-processing delay of output data of an AI model; where
the second target delay includes a fourth delay or a sixth delay.

In this embodiment, the AI model may be an AI model associated with the second information report.

The preprocessing delay of input data of an AI model can be understood as a delay for preprocessing the input data of the AI model, for example, a processing delay before the input data is input to the AI model. The post-processing delay of output data of an AI model can be understood as a delay for processing the output data of the AI model.

Optionally, the reporting or not reporting, by the terminal, a first information report based on the report configuration includes:

in a case that any one of the following is satisfied, not updating, by the terminal, the first information report, or not reporting, by the terminal, the first information report:

a time of reporting the first information report starts earlier than a first time;
a time of reporting the first information report starts earlier than a second time;
a time of reporting the first information report starts earlier than a third time; and
a time of reporting the first information report starts earlier than a fourth time; where
the reporting time of the first information report is determined based on the report configuration, the first time is determined based on a first reference time and a first delay associated with the first information report, the second time is determined based on a second reference time and a second delay associated with the first information report, the third time is determined based on the first reference time and a seventh delay associated with the first information report, and the fourth time is determined based on the second reference time and an eighth delay associated with the first information report; and
the first reference time is an end time of measurement resources corresponding to the first information report, and the second reference time is an end time of reception of triggering signaling for the first information report by the terminal.

For example, the second reference time may be an end time of the terminal's reception of a PDCCH that triggers the first information report. The first delay and second delay associated with the first information report may be determined based on a delay required for AI model-related processing associated with the first information report. The seventh delay and eighth delay associated with the first information report may be determined based on a delay required for computing the information associated with the first information report.

In some optional embodiments, the first time may be a time delayed backward from the first reference time by the first delay associated with the first information report, the second time may be a time delayed backward from the second reference time by the second delay associated with the first information report, the third time may be a time delayed backward from the first reference time by the seventh delay associated with the first information report, and the fourth time may be a time delayed backward from the second reference time by the eighth delay associated with the first information report.

Specifically, in a case that the time of reporting the first information report starts earlier than any one of the first time, the second time, the third time, and the fourth time, the terminal does not update the first information report, or the terminal does not report the first information report, where in a case that the terminal does not update the first information report, the terminal may report the information report that is not updated; in a case that the terminal does not report the first information report, the terminal may not perform related processing of the first information report, for example, if the first information report is AI-based CSI reporting, the terminal may not perform AI-based CSI processing.

In some optional embodiments, in a case that the time of reporting the first information report starts not earlier than the first time, the second time, the third time, and the fourth time, the terminal may report a valid information report, for example, as shown in FIG. 4.

Optionally, the first delay associated with the first information report includes a first AI processing delay associated with the first reference time, and the first AI processing delay is a delay used for AI model-related processing; or

the second delay associated with the first information report includes a second AI processing delay associated with the second reference time, and the second AI processing delay is a delay used for AI model-related processing; or

the seventh delay associated with the first information report includes a first computation delay associated with the first reference time, and the first computation delay is a delay used for information computation; or

the eighth delay associated with the first information report includes a second computation delay associated with the second reference time, and the second computation delay is a delay used for information computation.

For example, the first delay associated with the first information report may be a first AI processing delay used for AI model-related processing, and the first AI processing delay is a computation delay after the first reference time. The second delay associated with the first information report may be a second AI processing delay used for AI model-related processing, and the second AI processing delay is a computation delay after the second reference time. The seventh delay associated with the first information report may be a first computation delay used for information computation, and the first computation delay is a computation delay after the first reference time. The eighth delay associated with the first information report may be a second computation delay used for information computation, and the second computation delay is a computation delay after the second reference time.

It should be noted that the first computation delay and second computation delay can be understood as delays unrelated to AI model-related processing. For example, the first computation delay and second computation delay may be communication-related delays, where the communication-related delay may include at least one of a data collection delay, a PUSCH generation delay, a parsing delay of triggering signaling for information reporting, and the like.

In some optional embodiments, the second computation delay may be Z in the related art, and the first computation delay may be Z' in the related art. For specific content, reference may be made to the relevant descriptions in the foregoing embodiments, and details are not repeated herein.

Optionally, the first information includes fourth indication information, where the fourth indication information is used to indicate a third target delay, and the third target delay includes a first delay associated with the second information report or a second delay associated with the second information report.

For example, the fourth indication information may include the third target delay.

Optionally, the fourth indication information includes at least one second delay mapping relationship, where the second delay mapping relationship is a mapping relationship between tenth information and the third target delay; and the tenth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and

indication information used for indicating a monitoring indicator of an AI model.

In this embodiment, the AI functionality or AI model may be an AI functionality or AI model associated with the second information report. For example, the AI functionality or AI model related configuration information may include but is not limited to at least one of the following: the number of first sets, the number of reference signal resources associated with the first set, the number of time instances associated with the first set, the number of subbands associated with the first set, the number of ports associated with the first set, the number of beams associated with the first set, the number of second sets, the number of reference signals associated with the second set, the number of beams associated with the second set, the number of time instances associated with the second set, the number of frequency domain units associated with the second set, the number of subbands associated with the second set, and the number of ports associated with the second set; where the first set is a set corresponding to input of an AI model associated with the second information report, and the second set is a set corresponding to output of the AI model associated with the second information report.

Optionally, in a case that the second information report includes beam prediction-related information, the ninth information or the tenth information includes at least one of the following:

the number of beams associated with the first set;
the number of reference signal resources associated with the first set;
the number of time instances associated with the first set;
the number of beams associated with the second set; and
the number of time instances associated with the second set.

For example, in a case that the second information report includes beam prediction-related information, the target delay mapping relationship may include one of the following:

{number of beams associated with the first set/number of reference signal resources associated with the first set, number of beams associated with the second set, fourth target delay};
{number of beams associated with the first set/number of reference signal resources associated with the first set, number of beams associated with the second set, number of time instances associated with the second set, fourth target delay}; and
{number of beams associated with the first set/number of reference signal resources associated with the first set, number of time instances associated with the first set, number of beams associated with the second set, number of time instances associated with the second set, fourth target delay}; where
in a case that the target delay mapping relationship is the first delay mapping relationship, the fourth target delay is the second target delay; and in a case that the target delay mapping relationship is the second delay mapping relationship, the fourth target delay is the third target delay.

Optionally, in a case that the second information report includes beam prediction-related information, the ninth information or the tenth information includes at least one of the following:

the number of reference signal resources associated with the first set;
the number of time instances associated with the first set;
the number of ports associated with the first set;
the number of subbands associated with the first set;
the number of time instances associated with the second set; and
the number of frequency domain units associated with the second set.

For example, in a case that the second information report includes beam prediction-related information, the target delay mapping relationship may include one of the following:

{number of reference signal resources associated with the first set, number of subbands associated with the first set, number of frequency domain units associated with the second set, fourth target delay};
{number of reference signal resources associated with the first set, number of ports associated with the first set, number of frequency domain units associated with the second set, fourth target delay};
{number of reference signal resources associated with the first set, number of ports associated with the first set, number of subbands associated with the first set, number of frequency domain units associated with the second set, fourth target delay};
{number of reference signal resources associated with the first set, number of subbands associated with the first set, number of frequency domain units associated with the second set, number of time instances associated with the second set, fourth target delay};

{number of reference signal resources associated with the first set, number of ports associated with the first set, number of frequency domain units associated with the second set, number of time instances associated with the second set, fourth target delay};

{number of reference signal resources associated with the first set, number of ports associated with the first set, number of subbands associated with the first set, number of frequency domain units associated with the second set, number of time instances associated with the second set, fourth target delay};

{number of reference signal resources associated with the first set, number of subbands associated with the first set, number of time instances associated with the first set, number of frequency domain units associated with the second set, number of time instances associated with the second set, fourth target delay};

{number of reference signal resources associated with the first set, number of ports associated with the first set, number of time instances associated with the first set, number of frequency domain units associated with the second set, number of time instances associated with the second set, fourth target delay}; and

{number of reference signal resources associated with the first set, number of ports associated with the first set, number of subbands associated with the first set, number of time instances associated with the first set, number of frequency domain units associated with the second set, number of time instances associated with the second set, fourth target delay}; where

in a case that the target delay mapping relationship is the first delay mapping relationship, the fourth target delay is the second target delay; and in a case that the target delay mapping relationship is the second delay mapping relationship, the fourth target delay is the third target delay.

Optionally, in a case that the second information report includes CSI compression-related information, the ninth information or the tenth information includes at least one of the following:

the number of reference signal resources associated with the first set;
the number of time instances associated with the first set;
the number of ports associated with the first set; and
the number of subbands associated with the first set.

For example, in a case that the second information report includes CSI compression-related information, the target delay mapping relationship may include one of the following:

{number of reference signal resources associated with the first set, number of subbands associated with the first set, fourth target delay};

{number of reference signal resources associated with the first set, number of ports associated with the first set, fourth target delay}; and

{number of reference signal resources associated with the first set, number of ports associated with the first set, number of subbands associated with the first set, fourth target delay}; where

in a case that the target delay mapping relationship is the first delay mapping relationship, the fourth target delay is the second target delay; and in a case that the target delay mapping relationship is the second delay mapping relationship, the fourth target delay is the third target delay.

Optionally, the AI functionality or AI model related configuration information includes at least one of the following:

the number of first sets;
the number of reference signal resources associated with the first set;
the number of time instances associated with the first set;
the number of subbands associated with the first set;
the number of ports associated with the first set;
the number of beams associated with the first set;
the number of second sets;
the number of reference signals associated with the second set;
the number of beams associated with the second set;
the number of time instances associated with the second set;
the number of frequency domain units associated with the second set;
the number of subbands associated with the second set; and
the number of ports associated with the second set; where

the first set is a set corresponding to input of an AI model, and the second set is a set corresponding to output of the AI model.

In this embodiment, the number of ports associated with the first set may be the number of ports per reference signal resource, or may be the number of ports of all reference signal resources. Similarly, the number of ports associated with the second set may be the number of ports per reference signal resource, or may be the number of ports of all reference signal resources.

Optionally, in a case that the first information report includes beam prediction-related information, the AI functionality or AI model related configuration information includes at least one of the following:

the number of first sets;
the number of reference signal resources associated with the first set;
the number of beams associated with the first set;
the number of time instances associated with the first set;
the number of second sets;
the number of reference signal resources associated with the second set;
the number of beams associated with the second set; and
the number of time instances associated with the second set.

Optionally, in a case that the first information report includes CSI prediction-related information or CSI compression-related information, the AI functionality or AI model related configuration information includes at least one of the following:

the number of reference signal resources associated with the first set;
the number of time instances associated with the first set;
the number of subbands associated with the first set;
the number of ports associated with the first set;
the number of reference signal resources associated with the second set;
the number of time instances associated with the second set;
the number of subbands associated with the second set; and
the number of ports associated with the second set.

Optionally, the aperiodic measurement resource related information includes at least one of the following:

the number of time instances associated with an aperiodic measurement resource;
the number of reference signals associated with an aperiodic measurement resource set; and
the number of aperiodic measurement resource sets.

Optionally, the first information includes eleventh information, where the eleventh information is used to determine the maximum number of active resources that the terminal is able to support per unit time.

For example, for aperiodic CSI-RS resources and aperiodic CSI reporting, the following method may be used to indicate to the network-side device the maximum number of active resources that the terminal is able to support per unit time:

for periodic or semi-persistent CSI-RS resources, and in the case of aperiodic CSI reporting, for the maximum number of active resources at each moment, the UE reports a triplet when reporting capabilities, that is, {maximum number of active resources, maximum number of ports per active resource, maximum total number of ports}; and the number of CSI-RS time instances corresponding to each CSI report is indicated through Kp, where Kp represents the number of active resources (active resource) corresponding to one measurement resource.

Optionally, in a case that the second information report includes beam prediction-related information, the eleventh information includes one of the following:

the number of beams of the first set per unit time and the total number of active resources;
the number of reference signal resources of the first set per unit time and the total number of active resources;
the number of beams of the first set per unit time; and
the number of reference signal resources of the first set per unit time; where
the first set is a set corresponding to input of an AI model.

In this embodiment, the first set is a set corresponding to input of an AI model associated with the beam prediction-related information.

Optionally, in a case that the second information report includes CSI prediction-related information or CSI compression-related information, the eleventh information includes at least one of the number of reference signal resources associated with the first set and the number of ports associated with the first set; where the first set is a set corresponding to input of an AI model.

In this embodiment, the first set is a set corresponding to input of an AI model associated with the beam prediction-related information or the CSI compression-related information.

In some optional embodiments, in a case that the second information report includes CSI prediction-related information or CSI compression-related information, the eleventh information may include a triplet, that is, {maximum number of active resources, maximum number of ports per active resource, maximum total number of ports}.

Optionally, the first information further includes the number of time instances associated with the first set, where the first set is a set corresponding to input of an AI model.

In this embodiment, the first set may be a set corresponding to input of an AI model associated with the second information report.

Specifically, the terminal reports the number of time instances associated with the first set to the network-side device, so that the network-side device knows the number of time instances of the active resource associated with the information reporting performed by the terminal.

In some optional embodiments, the terminal may send the first information to the network-side device during model registration or capability reporting.

It should also be noted that the AI processing unit/AI model involved in the embodiments of this application can also be called an AI unit, an AI model, an ML model, an ML unit, an AI structure, an AI functionalityality, an AI feature, a machine learning model, a neural network, a neural network function, a neural network function, and the like; or the AI processing unit/AI model involved in the embodiments of this application may also be a processing unit that can implement a specific AI-related algorithm, formula, processing flow, capability, and the like; or the AI processing unit/AI model involved in the embodiments of this application may be a processing method, an algorithm, a function, a module, or a unit specific to a specific dataset; or the AI processing unit/AI model involved in the embodiments of this application may be a processing method, an algorithm, a function, a module, or a unit running on AI/ML related hardware such as a graphics processing unit (Graphics Processing Unit, GPU), a neural network processing unit (Neural network Processing Unit, NPU), a tensor processing unit (Tensor Processing Unit, TPU), or an application specific integrated circuit (Application Specific Integrated Circuit, ASIC), which is not specifically limited in this application. Optionally, the specific dataset includes input or output of an AI unit/AI model.

In addition, the identifier of the AI processing unit/AI model involved in the embodiments of this application may be an AI model identifier, an AI structure identifier, an AI algorithm identifier, or an identifier of a specific dataset associated with the AI processing unit/AI model, or an identifier of an AI/ML-related specific scenario, environment, channel feature, or device, or an identifier of an AI/ML-related function, feature, capability, or module, which is not specifically limited in the embodiments of this application.

Referring to FIG. 5, FIG. 5 is a flowchart of an information reporting configuration method according to an embodiment of this application. The method may be performed by a network-side device. As shown in FIG. 5, the method includes the following steps.

Step 501: The network-side device receives first information from a terminal.

Step 502: The network-side device sends a report configuration to the terminal, where the report configuration is associated with the first information.

The first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first processing unit is configured for information computation, the second processing unit is configured for AI model-related processing, and the third processing unit is configured for information computation and AI model-related processing.

Optionally, the first information includes eighth information, where the eighth information is used to determine at least one of the following: the number of first processing units required to generate a second information report, the number of second processing units required to generate the second information report, and the number of third processing units required to generate the second information report; and
the eighth information includes at least one of the following:

AI functionality or AI model related configuration information;
the number of AI models used for an AI functionality;
indication information used for indicating an AI functionality;
an AI model identifier;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model;
a first coefficient, where the first coefficient is related to a capability of the terminal;
a second coefficient, where the second coefficient is related to a capability of the terminal; and
a third coefficient, where the third coefficient is related to a capability of the terminal.

It should be noted that in this embodiment, the specific implementation for the network-side device to determine, based on the eighth information, the number of first processing units, second processing units, or third processing units required to generate the second information report is the same as or similar to the implementation for determining the number of first processing units, second processing units, or third processing units required to generate the first information report, and details are not described herein.
Optionally, the AI functionality or AI model related configuration information includes at least one of the following:

the number of first sets;
the number of reference signal resources associated with the first set;
the number of time instances associated with the first set;
the number of subbands associated with the first set;
the number of ports associated with the first set;
the number of beams associated with the first set;
the number of second sets;
the number of reference signals associated with the second set;
the number of beams associated with the second set;
the number of time instances associated with the second set;
the number of frequency domain units associated with the second set;
the number of subbands associated with the second set; and
the number of ports associated with the second set; where
the first set is a set corresponding to input of an AI model, and the second set is a set corresponding to output of the AI model.

Optionally, the first information includes third indication information or fourth indication information; where

the third indication information is used to indicate a second target delay, where the second target delay includes a fourth delay associated with the second information report or a sixth delay associated with the second information report, the fourth delay associated with the second information report is a first AI processing delay associated with an end time of measurement resources corresponding to the second information report, the first AI processing delay is a delay used for AI model-related processing, the fourth delay associated with the second information report is used to determine the first delay associated with the second information report, the sixth delay associated with the second information report is a second AI processing delay associated with an end time of reception of triggering signaling for the second information report, the second AI processing delay is a delay used for AI model-related processing, and the sixth delay associated with the second information report is used to determine the second delay associated with the second information report; and
the fourth indication information is used to indicate a third target delay, where the third target delay includes a first delay associated with the second information report or a second delay associated with the second information report, the first delay associated with the second information report includes a first AI processing delay associated with an end time of measurement resources corresponding to the second information report, the first AI processing delay is a delay used for AI model-related processing, the second delay associated with the second information report includes a second AI processing delay associated with an end time of reception of triggering signaling for the second information report, and the second AI processing delay is a delay used for AI model-related processing.

Optionally, the third indication information includes at least one first delay mapping relationship, where the first delay mapping relationship is a mapping relationship between ninth information and the second target delay; and the ninth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model;
or
the fourth indication information includes at least one second delay mapping relationship, where the second delay mapping relationship is a mapping relationship between tenth information and the third target delay; and the tenth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model.

Optionally, the occupation duration of the second processing unit or the third processing unit is determined based on at least one of the following:

a first occupation duration, where the first occupation duration is an occupation duration of the first processing unit;
AI functionality or AI model activation signaling;
AI functionality or AI model deactivation signaling;
AI functionality or AI model switching signaling;
a start time of input data collection associated with an AI functionality or an AI model;
an end time of output data report associated with an AI functionality or an AI model;
a measurement resource associated with an AI functionality or an AI model; and
triggering signaling of the first information report.

Optionally, the occupation duration of the second processing unit or the third processing unit is the first occupation duration;
or
the occupation duration of the second processing unit is determined based on the first occupation duration and N time elements, where N is a positive integer.

Optionally, a start time of the occupation duration of the second processing unit or the third processing unit is one of the following:

a time when activation signaling triggers an AI functionality or an AI model;
a time when switching signaling triggers an AI functionality or an AI model;
a time when downlink control information DCI triggers the first information report;
a time when a media access control control element MAC CE triggers the first information report; and
a start time of a measurement resource associated with an AI functionality or an AI model.

Optionally, an end time of the occupation duration of the second processing unit or the third processing unit is one of the following:

a time when deactivation signaling turns off an AI functionality or an AI model;

a time when switching signaling turns off an AI functionality or an AI model; and
an end time of reporting of the first information report.

Optionally, the first information includes eleventh information, where the eleventh information is used to determine the maximum number of active resources that the terminal is able to support per unit time.
Optionally, in a case that the second information report includes beam prediction-related information, the eleventh information includes one of the following:

the number of beams of the first set per unit time and the total number of active resources;
the number of reference signal resources of the first set per unit time and the total number of active resources;
the number of beams of the first set per unit time; and
the number of reference signal resources of the first set per unit time; where
the first set is a set corresponding to input of an AI model.

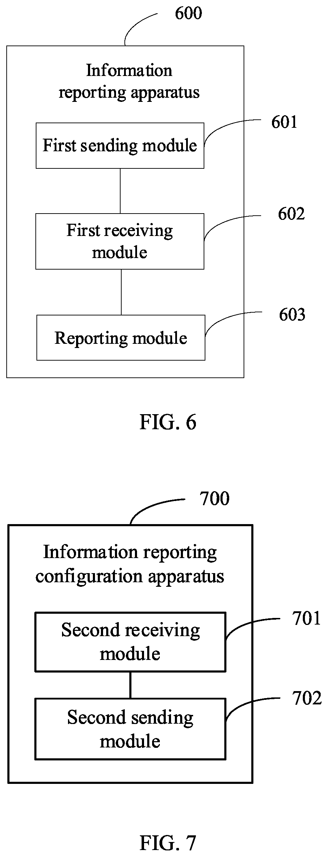

Optionally, in a case that the second information report includes CSI prediction-related information or CSI compression-related information, the eleventh information includes at least one of the number of reference signal resources associated with the first set and the number of ports associated with the first set; where
the first set is a set corresponding to input of an AI model.
Optionally, the first information further includes the number of time instances associated with the first set, where the first set is a set corresponding to input of an AI model.
It should be noted that for the implementation of this embodiment, reference may be made to the relevant descriptions of the embodiment shown in FIG. 2, and details are not repeated herein.
It should be noted that the information reporting method according to the embodiments of this application may be executed by an information reporting apparatus, or a control module in an information reporting apparatus used for executing the information reporting method. In the embodiments of this application, an information reporting apparatus executing the information reporting method is taken as an example to illustrate an information reporting apparatus according to the embodiments of this application.
Referring to FIG. 6, FIG. 6 is a structural diagram of an information reporting apparatus according to an embodiment of this application. As shown in FIG. 6, the information reporting apparatus 600 includes:

a first sending module 601 configured to send first information to a network-side device;
a first receiving module 602 configured to receive a report configuration from the network-side device, where the report configuration is associated with the first information; and
a reporting module 603 configured to report or not report a first information report based on the report configuration, where the first information report includes information obtained based on artificial intelligence AI processing; where the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first information report belongs to the second information report, the first processing unit is configured for information computation, the second processing unit is configured for AI model-related processing, and the third processing unit is configured for information computation and AI model-related processing.

Optionally, the reporting module is specifically configured to:

in a case that at least one of the following is satisfied, not update the first information report, or not report the first information report;

the number of first processing units available in the terminal is less than the number of first processing units required to generate the first information report;

the number of second processing units available in the terminal is less than the number of second processing units required to generate the first information report; and

the number of third processing units available in the terminal is less than the number of third processing units required to generate the first information report; where

the number of first processing units, second processing units, or third processing units required to generate the first information report is determined based on the report configuration.

Optionally, the number of first processing units required to generate the first information report is determined based on second information indicated by the report configuration, where the second information includes at least one of the following:

aperiodic measurement resource related information;

AI functionality or AI model related configuration information;

first indication information, used for indicating a report quantity of channel state information CSI report, where the first information report is a CSI report; and

second indication information, used for indicating a codebook type associated with CSI reporting, where the first information report is a CSI report.

Optionally, the number of first processing units required to generate the first information report is determined based on the second information and fourth information, where the fourth information includes at least one of the following:

the number of AI models used for an AI functionality;

a first coefficient, where the first coefficient is related to a capability of the terminal; and

AI functionality or AI model related configuration information.

Optionally, the number of first processing units required to generate the first information report is calculated based on the following formula:

$$O_1 = y * L_1$$

where $O_1$ represents the number of first processing units required to generate the first information report, y represents the first coefficient, and $L_1$ represents a first factor, where the first factor is determined based on the second information, or the first factor is determined based on information, other than the first coefficient, in the second information and the third information.

Optionally, the number of second processing units required to generate the first information report is determined based on fourth information indicated by the report configuration, where the fourth information includes at least one of the following:

aperiodic measurement resource related information;

AI functionality or AI model related configuration information;

indication information used for indicating an AI functionality;

an AI model identifier;

a dataset identifier, where a dataset identified by the dataset identifier is an AI functionality or AI model related dataset;

indication information used for indicating a lifecycle stage of an AI model or an AI functionality; and

indication information used for indicating a monitoring indicator of an AI model.

Optionally, the number of second processing units required to generate the first information report is determined based on the third information and fifth information, where the fifth information includes at least one of the following:

the number of AI models used for an AI functionality;

a second coefficient, where the second coefficient is related to a capability of the terminal;

AI functionality or AI model related configuration information;

indication information used for indicating an AI functionality;

an AI model identifier; and

a dataset identifier, where a dataset identified by the dataset identifier is an AI functionality or AI model related dataset.

Optionally, the number of third processing units required to generate the first information report is determined based on sixth information indicated by the report configuration, where the sixth information includes at least one of the following:

indication information used for indicating an AI functionality;
an AI model identifier;
AI functionality or AI model related configuration information;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model; and
aperiodic measurement resource related information.

Optionally, the number of third processing units required to generate the first information report is determined based on the sixth information and seventh information, where the seventh information includes at least one of the following:

the number of AI models used for an AI functionality;
a first coefficient, where the first coefficient is related to a capability of the terminal;
a second coefficient, where the second coefficient is related to a capability of the terminal;
a third coefficient, where the third coefficient is related to a capability of the terminal;
indication information used for indicating an AI functionality;
an AI model identifier;
AI functionality or AI model related configuration information; and
a dataset identifier, where a dataset identified by the dataset identifier is an AI functionality or AI model related dataset.

Optionally, the number of third processing units required to generate the first information report is determined based on one of the following formulas:

$$O_2 = N_1 + N_2;$$

$$O_2 = N_1 * k_1;$$

$$O_2 = N_1 * k_1 + N_2;$$

$$O_2 = N_1^{k_1};$$

$$O_2 = N_1^{k_1} + N_2;$$

$$O_2 = N_2 * k_2;$$

$$O_2 = N_2 * k_2 + N_1;$$

$$O_X = N_2^{k_2};$$

$$O_2 = N_2^{k_2} + N_1;$$

$$O_2 = N_2 * k_2 + N_1 * k_1;$$

and

$$O_2 = k_2(N_2 + N_1);$$

where

$O_2$ represents the number of third processing units required to generate the first information report; $N_1$ represents a second factor, where the second factor is related to the number of first processing units required to generate the first information report; $N_2$ represents a third factor, where the third factor is related to the number of second processing units required to generate the first information report; and $k_1$ represents a third coefficient, $k_2$ represents a second coefficient, and the second coefficient and the third coefficient are each related to a capability of the terminal; the second factor is determined based on at least one of the following:

aperiodic measurement resource related information;
AI functionality or AI model related configuration information; and
a first coefficient, where the first coefficient is related to a capability of the terminal; and
the third factor is determined based on at least one of the following:

indication information used for indicating an AI functionality;
an AI model identifier;
AI functionality or AI model related configuration information;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model; and
aperiodic measurement resource related information.

Optionally, the first information includes eighth information, where the eighth information is used to determine at least one of the following: the number of first processing units required to generate a second information report, the number of second processing units required to generate the second information report, and the number of third processing units required to generate the second information report; and
the eighth information includes at least one of the following:

AI functionality or AI model related configuration information;
the number of AI models used for an AI functionality;
indication information used for indicating an AI functionality;
an AI model identifier;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model;
a first coefficient, where the first coefficient is related to a capability of the terminal;
a second coefficient, where the second coefficient is related to a capability of the terminal; and
a third coefficient, where the third coefficient is related to a capability of the terminal.

Optionally, the occupation duration of the second processing unit or the third processing unit is determined based on at least one of the following:

a first occupation duration, where the first occupation duration is an occupation duration of the first processing unit;
AI functionality or AI model activation signaling;
AI functionality or AI model deactivation signaling;
AI functionality or AI model switching signaling;
a start time of input data collection associated with an AI functionality or an AI model;
an end time of output data report associated with an AI functionality or an AI model;
a measurement resource associated with an AI functionality or an AI model; and
triggering signaling of the first information report.

Optionally, the occupation duration of the second processing unit or the third processing unit is the first occupation duration;

or

the occupation duration of the second processing unit is determined based on the first occupation duration and N time elements, where N is a positive integer.

Optionally, a start time of the occupation duration of the second processing unit or the third processing unit is one of the following:

> a time when activation signaling triggers an AI functionality or an AI model;
> a time when switching signaling triggers an AI functionality or an AI model;
> a time when downlink control information DCI triggers the first information report;
> a time when a media access control control element MAC CE triggers the first information report; and
> a start time of a measurement resource associated with an AI functionality or an AI model.

Optionally, an end time of the occupation duration of the second processing unit or the third processing unit is one of the following:

> a time when deactivation signaling turns off an AI functionality or an AI model;
> a time when switching signaling turns off an AI functionality or an AI model; and
> an end time of reporting of the first information report.

Optionally, the information reporting includes at least one of channel state information CSI reporting and positioning-related information reporting, where the positioning-related information reporting includes at least one of the following: reporting of position information of the terminal, and reporting of a positioning measurement quantity.

Optionally, the reporting module is specifically configured to:

in a case that any one of the following is satisfied, not update the first information report, or not report the first information report:

> a time of reporting the first information report starts earlier than a first time; and
> a time of reporting the first information report starts earlier than a second time; where
> the reporting time of the first information report is determined based on the report configuration; the first time is determined based on a first reference time and a first delay associated with the first information report, and the first reference time is an end time of measurement resources corresponding to the first information report; and the second time is determined based on a second reference time and a second delay associated with the first information report reporting, and the second reference time is an end time of reception of triggering signaling for the first information report by the terminal.

Optionally, the first delay associated with the first information report is determined based on a third delay associated with the first information report and a fourth delay associated with the first information report, where the third delay associated with the first information report is a first computation delay associated with the first reference time, the first computation delay is a delay used for information computation, the fourth delay associated with the first information report is a first AI processing delay associated with the first reference time, and the first AI processing delay is a delay used for AI model-related processing;

or

the second delay associated with the first information report is determined based on a fifth delay associated with the first information report and a sixth delay associated with the first information report, where the fifth delay associated with the first information report is a second computation delay associated with the second reference time, the second computation delay is a delay used for information computation, the sixth delay is a second AI processing delay associated with the second reference time, and the second AI processing delay is a delay used for AI model-related processing.

Optionally, the first target delay is calculated based on one of the following formulas:

$$t_\alpha = t_\beta + t_\gamma;$$

$$t_\alpha = t_\beta * t_\gamma;$$

and

$$t_\alpha = t_\beta{}^{t_\gamma};$$

where

$t_\alpha$ represents the first target delay; and in a case that the first target delay is the first delay associated with the first information report, $t_\beta$ represents the third delay associated with the first information report, and $t_\gamma$ represents the fourth delay associated with the first information report; or in a case that the target delay is the second delay associated with the first information report, $t_\beta$ represents the fifth delay associated with the first information report, and $t_\gamma$ represents the sixth delay associated with the first information report.

Optionally, the first information includes third indication information, where the third indication information is used to indicate a second target delay, and the second target delay includes a fourth delay associated with the second information report or a sixth delay associated with the second information report.

Optionally, the third indication information includes at least one first delay mapping relationship, where the first delay mapping relationship is a mapping relationship between ninth information and the second target delay; and the ninth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model.

Optionally, the second target delay includes at least one of the following:

a preprocessing delay of input data of an AI model;
an inference delay of an AI model; and
a post-processing delay of output data of an AI model; where
the second target delay includes a fourth delay or a sixth delay.

Optionally, the reporting module is specifically configured to:

in a case that any one of the following is satisfied, not update the first information report, or not report the first information report; where
a time of reporting the first information report starts earlier than a first time;
a time of reporting the first information report starts earlier than a second time;
a time of reporting the first information report starts earlier than a third time; and
a time of reporting the first information report starts earlier than a fourth time; where
the reporting time of the first information report is determined based on the report configuration, the first time is determined based on a first reference time and a first delay associated with the first information report, the second time is determined based on a second reference time and a second delay associated with the first information report, the third time is determined based on the first reference time and a seventh delay associated with the first information report, and the fourth time is determined based on the second reference time and an eighth delay associated with the first information report; and
the first reference time is an end time of measurement resources corresponding to the first information report, and the second reference time is an end time of reception of triggering signaling for the first information report by the terminal.

Optionally, the first delay associated with the first information report includes a first AI processing delay associated with the first reference time, and the first AI processing delay is a delay used for AI model-related processing; or

the second delay associated with the first information report includes a second AI processing delay associated with the second reference time, and the second AI processing delay is a delay used for AI model-related processing; or
the seventh delay associated with the first information report includes a first computation delay associated with the first reference time, and the first computation delay is a delay used for information computation; or
the eighth delay associated with the first information report includes a second computation delay associated with the second reference time, and the second computation delay is a delay used for information computation.

Optionally, the first information includes fourth indication information, the fourth indication information is used to indicate a third target delay, and the third target delay includes a first delay associated with the second information report or a second delay associated with the second information report.

Optionally, the fourth indication information includes at least one second delay mapping relationship, where the second delay mapping relationship is a mapping relationship between tenth information and the third target delay; and the tenth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model.

Optionally, the AI functionality or AI model related configuration information includes at least one of the following:

the number of first sets;
the number of reference signal resources associated with the first set;
the number of time instances associated with the first set;
the number of subbands associated with the first set;
the number of ports associated with the first set;
the number of beams associated with the first set;
the number of second sets;
the number of reference signals associated with the second set;
the number of beams associated with the second set;
the number of time instances associated with the second set;
the number of frequency domain units associated with the second set;
the number of subbands associated with the second set; and
the number of ports associated with the second set; where
the first set is a set corresponding to input of an AI model, and the second set is a set corresponding to output of the AI model.

Optionally, in a case that the first information report includes beam prediction-related information, the AI functionality or AI model related configuration information includes at least one of the following:

the number of first sets;
the number of reference signal resources associated with the first set;
the number of beams associated with the first set;
the number of time instances associated with the first set;
the number of second sets;
the number of reference signal resources associated with the second set;
the number of beams associated with the second set; and
the number of time instances associated with the second set.

Optionally, in a case that the first information report includes CSI prediction-related information or CSI compression-related information, the AI functionality or AI model related configuration information includes at least one of the following:

the number of reference signal resources associated with the first set;
the number of time instances associated with the first set;
the number of subbands associated with the first set;
the number of ports associated with the first set;
the number of reference signal resources associated with the second set;
the number of time instances associated with the second set;
the number of subbands associated with the second set; and
the number of ports associated with the second set.

Optionally, the aperiodic measurement resource related information includes at least one of the following:

the number of time instances associated with an aperiodic measurement resource;
the number of reference signals associated with an aperiodic measurement resource set; and
the number of aperiodic measurement resource sets.

Optionally, the first information includes eleventh information, where the eleventh information is used to determine the maximum number of active resources that the terminal is able to support per unit time.

Optionally, in a case that the second information report includes beam prediction-related information, the eleventh information includes one of the following:

the number of beams of the first set per unit time and the total number of active resources;
the number of reference signal resources of the first set per unit time and the total number of active resources;
the number of beams of the first set per unit time; and
the number of reference signal resources of the first set per unit time; where
the first set is a set corresponding to input of an AI model.

Optionally, in a case that the second information report includes CSI prediction-related information or CSI compression-related information, the eleventh information includes at least one of the number of reference signal resources associated with the first set and the number of ports associated with the first set; where the first set is a set corresponding to input of an AI model.

Optionally, the first information further includes the number of time instances associated with the first set, where the first set is a set corresponding to input of an AI model.

The information reporting apparatus in the embodiments of this application may be an electronic device, such as an electronic device having an operating system, or a component in an electronic device, such as an integrated circuit or a chip. The electronic device may be a terminal or another device different from a terminal. For example, the terminal may include but is not limited to the types of the terminal 11 listed above, and the another device may be a server, a network attached storage (Network Attached Storage, NAS), or the like. This is not specifically limited in the embodiments of this application.

The information reporting apparatus according to the embodiments of this application can implement various processes implemented by the method embodiment in FIG. 2, with the same technical effects achieved. To avoid repetition, details are not described herein.

It should be noted that the information reporting configuration method according to the embodiments of this application may be executed by an information reporting configuration apparatus, or a control module in an information reporting configuration apparatus used for executing the information reporting configuration method. In the embodiments of this application, an information reporting configuration apparatus executing the information reporting configuration method is taken as an example to illustrate an information reporting configuration apparatus according to the embodiments of this application.

Referring to FIG. 7, FIG. 7 is a structural diagram of an information reporting configuration apparatus according to an embodiment of this application. As shown in FIG. 7, the information reporting configuration apparatus 700 includes:

a second receiving module 701 configured to receive first information from a terminal; and
a second sending module 702 configured to send a report configuration to the terminal, where the report configuration is associated with the first information; where
the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where

the second information report is information obtained based on AI processing, the first processing unit is configured for information computation, the second processing unit is configured for AI model-related processing, and the third processing unit is configured for information computation and AI model-related processing.

Optionally, the first information includes eighth information, where the eighth information is used to determine at least one of the following: the number of first processing units required to generate a second information report, the number of second processing units required to generate the second information report, and the number of third processing units required to generate the second information report; and

the eighth information includes at least one of the following:

AI functionality or AI model related configuration information;
the number of AI models used for an AI functionality;
indication information used for indicating an AI functionality;
an AI model identifier;
a dataset identifier, where a dataset identified by the dataset identifier is an AI functionality or AI model related dataset;
indication information used for indicating a lifecycle stage of an AI model or an AI functionality;
indication information used for indicating a monitoring indicator of an AI model;
a first coefficient, where the first coefficient is related to a capability of the terminal;
a second coefficient, where the second coefficient is related to a capability of the terminal; and
a third coefficient, where the third coefficient is related to a capability of the terminal.

Optionally, the AI functionality or AI model related configuration information includes at least one of the following:

the number of first sets;
the number of reference signal resources associated with the first set;
the number of time instances associated with the first set;
the number of subbands associated with the first set;
the number of ports associated with the first set;
the number of beams associated with the first set;
the number of second sets;
the number of reference signals associated with the second set;
the number of beams associated with the second set;
the number of time instances associated with the second set;
the number of frequency domain units associated with the second set;
the number of subbands associated with the second set; and
the number of ports associated with the second set; where
the first set is a set corresponding to input of an AI model, and the second set is a set corresponding to output of the AI model.

Optionally, the first information includes third indication information or fourth indication information; where

the third indication information is used to indicate a second target delay, where the second target delay includes a fourth delay associated with the second information report or a sixth delay associated with the second information report, the fourth delay associated with the second information report is a first AI processing delay associated with an end time of measurement resources corresponding to the second information report, the first AI processing delay is a delay used for AI model-related processing, the fourth delay associated with the second information report is used to determine the first delay associated with the second information report, the sixth delay associated with the second information report is a second AI processing delay associated with an end time of reception of triggering signaling for the second information report, the second AI processing delay is a delay used for AI model-related processing, and the sixth delay associated with the second information report is used to determine the second delay associated with the second information report; and

the fourth indication information is used to indicate a third target delay, where the third target delay includes a first delay associated with the second information report or a second delay associated with the second information report, the first delay associated with the second information report includes a first AI processing delay associated with an end time of measurement resources corresponding to the second information report, the first AI processing delay is a delay used for AI model-related processing, the second delay associated with the second information report includes a second AI processing delay associated with an end time of reception of triggering signaling for the second information report, and the second AI processing delay is a delay used for AI model-related processing.

Optionally, the third indication information includes at least one first delay mapping relationship, where the first delay mapping relationship is a mapping relationship between ninth information and the second target delay; and the ninth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model;
or
the fourth indication information includes at least one second delay mapping relationship, where the second delay mapping relationship is a mapping relationship between tenth information and the third target delay; and
the tenth information includes at least one of the following:

indication information used for indicating an AI functionality;
an AI model identifier;
a dataset identifier, where a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model.

Optionally, the occupation duration of the second processing unit or the third processing unit is determined based on at least one of the following:

a first occupation duration, where the first occupation duration is an occupation duration of the first processing unit;
AI functionality or AI model activation signaling;
AI functionality or AI model deactivation signaling;
AI functionality or AI model switching signaling;
a start time of input data collection associated with an AI functionality or an AI model;
an end time of output data report associated with an AI functionality or an AI model;
a measurement resource associated with an AI functionality or an AI model; and
triggering signaling of the first information report.

Optionally, the occupation duration of the second processing unit or the third processing unit is the first occupation duration;
or
the occupation duration of the second processing unit is determined based on the first occupation duration and N time elements, where N is a positive integer.

Optionally, a start time of the occupation duration of the second processing unit or the third processing unit is one of the following:

a time when activation signaling triggers an AI functionality or an AI model;
a time when switching signaling triggers an AI functionality or an AI model;
a time when downlink control information DCI triggers the first information report;
a time when a media access control control element MAC CE triggers the first information report; and
a start time of a measurement resource associated with an AI functionality or an AI model.

Optionally, an end time of the occupation duration of the second processing unit or the third processing unit is one of the following:

a time when deactivation signaling turns off an AI functionality or an AI model;
a time when switching signaling turns off an AI functionality or an AI model; and
an end time of reporting of the first information report.

Optionally, the first information includes eleventh information, where the eleventh information is used to determine the maximum number of active resources that the terminal is able to support per unit time.

Optionally, in a case that the second information report includes beam prediction-related information, the eleventh information includes one of the following:

the number of beams of the first set per unit time and the total number of active resources;
the number of reference signal resources of the first set per unit time and the total number of active resources;
the number of beams of the first set per unit time; and
the number of reference signal resources of the first set per unit time; where
the first set is a set corresponding to input of an AI model.

Optionally, in a case that the second information report includes CSI prediction-related information or CSI compression-related information, the eleventh information includes at least one of the number of reference signal resources associated with the first set and the number of ports associated with the first set; where the first set is a set corresponding to input of an AI model.

Optionally, the first information further includes the number of time instances associated with the first set, where the first set is a set corresponding to input of an AI model.

The information reporting configuration apparatus in the embodiments of this application may be an electronic device, such as an electronic device having an operating system, or a component in an electronic device, such as an integrated circuit or a chip. The electronic device may be a network-side device or another device different from the network-side device. For example, the network-side device may include but is not limited to the types of the network-side device 12 listed above, and the another device may be a server, a network attached storage (Network Attached Storage, NAS), or the like. This is not specifically limited in the embodiments of this application.

The information reporting configuration apparatus according to the embodiments of this application can implement various processes implemented by the method embodiment in FIG. 5, with the same technical effects achieved. To avoid repetition, details are not described herein.

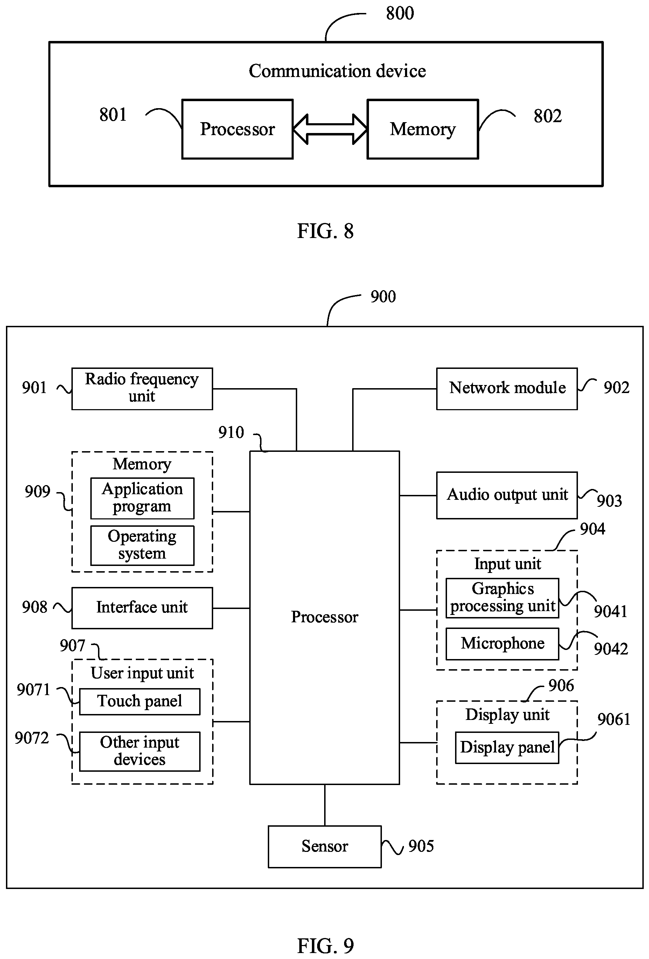

Optionally, as shown in FIG. 8, an embodiment of this application further provides a communication device 800 including a processor 801 and a memory 802. The memory 802 stores a program or instructions capable of running on the processor 801. When the communication device 800 is a terminal, the program or instructions, when executed by the processor 801, implement the steps of the foregoing information reporting method embodiments, with the same technical effects achieved. When the communication device 800 is a network-side device, the program or instructions, when executed by the processor 801, implement the steps of the foregoing information reporting configuration method embodiments, with the same technical effects achieved. To avoid repetition, details are not described herein.

An embodiment of this application further provides a terminal including a processor and a communication interface. The communication interface is configured to: send first information to a network-side device; receive a report configuration from the network-side device, where the report configuration is associated with the first information; and report or not report a first information report based on the report configuration, where the first information report includes information obtained based on artificial intelligence AI processing; where the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, where the first delay is associated with an end time of measurement resources corresponding to the second information report; and
a second delay associated with the second information report, where the second delay is associated with an end time of reception of triggering signaling for the second information report; where
the second information report is information obtained based on AI processing, the first information report belongs to the second information report, the first processing unit is configured for information computation, the second processing unit is configured for AI model-related processing, and the third processing unit is configured for information computation and AI model-related processing.

This terminal embodiment corresponds to the foregoing terminal-side method embodiment, and each implementation process and implementation of the foregoing method embodiment can be applied to this terminal embodiment, with the same technical effects achieved. Specifically, FIG. 9 is a schematic diagram of a hardware structure of a terminal implementing an embodiment of this application.

The terminal 900 includes but is not limited to: at least some of components such as a radio frequency unit 901, a network module 902, an audio output unit 903, an input unit 904, a sensor 905, a display unit 906, a user input unit 907, an interface unit 908, a memory 909, and a processor 910.

Those skilled in the art can understand that the terminal 900 may further include a power source (such as a battery) supplying power to the components. The power source may be logically connected to the processor 910 through a power management system, so as to implement functions such as charging management, discharging management, and power consumption management through the power management system. The structure of the terminal shown in FIG. 9 does not constitute any limitation on the terminal. The terminal may include more or fewer components than shown in the figure, or a combination of some components, or the components disposed differently. Details are not described herein.

It should be understood that in the embodiments of this application, the input unit 904 may include a graphics processing unit (Graphics Processing Unit, GPU) 9041 and a microphone 9042. The graphics processing unit 9041 processes image data of a still picture or videos obtained by an image capture apparatus (such as a camera) in a video capture mode or an image capture mode. The display unit 906 may include a display panel 9061, and the display panel 9061 may be configured in a form of a liquid crystal display, an organic light-emitting diode, or the like. The user input unit 907 includes at least one of a touch panel 9071 and other input devices 9072. The touch panel 9071 is also referred to as a touchscreen. The touch panel 9071 may include two parts: a touch detection apparatus and a touch controller. The other input devices 9072 may include but are not limited to a physical keyboard, a function key (such as a volume control key or an on/off key), a trackball, a mouse, and a joystick. Details are not described herein.

In the embodiments of this application, after receiving downlink data from the network-side device, the radio frequency unit 901 can transmit the downlink data to the processor 910 for processing. In addition, the radio frequency unit 901 can send uplink data to the network-side device. Typically, the radio frequency unit 901 includes but is not limited to an antenna, an amplifier, a transceiver, a coupler, a low noise amplifier, and a duplexer.

The memory 909 may be configured to store a software program or instructions and various data. The memory 909 may mainly include a first storage area for storing programs or instructions and a second storage area for storing data. The first storage area may store an operating system, an application program or instructions required by at least one function (for example, a sound play function or an image play function), and the like. Additionally, the memory 909 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), or a direct rambus random access memory (Direct Rambus RAM, DRRAM). The memory 909 in the embodiment of this application includes but is not limited to these and any other suitable types of memory.

The processor 910 may include one or more processing units. Optionally, the processor 910 integrates an application processor and a modem processor. The application processor primarily processes operations involving an operating system, a user interface, an application program, or the like. The modem processor, for example, a baseband processor, primarily processes radio communication signals. It can be understood that the modem processor may alternatively not be integrated into the processor 910.

The radio frequency unit 901 is configured to: send first information to a network-side device; receive a report configuration from the network-side device, where the report configuration is associated with the first information; and report or not report a first information report based on the report configuration, where the first information report includes information obtained based on artificial intelligence AI processing; where

the first information is used to determine at least one of the following:

    the number of first processing units required to generate a second information report;
    the number of first processing units available in the terminal;
    the number of second processing units required to generate the second information report;
    the number of second processing units available in the terminal;
    the number of third processing units required to generate the second information report;
    the number of third processing units available in the terminal;
    an occupation duration of the second processing unit;

an occupation duration of the third processing unit;

the maximum number of active resources that the terminal is able to support per unit time;

a first delay associated with the second information report, where the first delay is associated with an end time of measurement resources corresponding to the second information report; and

a second delay associated with the second information report, where the second delay is associated with an end time of reception of triggering signaling for the second information report; where

the second information report is information obtained based on AI processing, the first information report belongs to the second information report, the first processing unit is configured for information computation, the second processing unit is configured for AI model-related processing, and the third processing unit is configured for information computation and AI model-related processing.

It can be understood that for the implementation processes of various implementations mentioned in this embodiment, reference may be made to the relevant descriptions of the foregoing method embodiments, and the same or corresponding technical effects can be achieved. To avoid repetition, details are not described herein.

An embodiment of this application further provides a network-side device including a processor and a communication interface. The communication interface is configured to: receive first information from a terminal; and send a report configuration to the terminal, where the report configuration is associated with the first information; where the first information is used to determine at least one of the following:

the number of first processing units required to generate a second information report;

the number of first processing units available in the terminal;

the number of second processing units required to generate the second information report;

the number of second processing units available in the terminal;

the number of third processing units required to generate the second information report;

the number of third processing units available in the terminal;

an occupation duration of the second processing unit;

an occupation duration of the third processing unit;

the maximum number of active resources that the terminal is able to support per unit time;

a first delay associated with the second information report, where the first delay is associated with an end time of measurement resources corresponding to the second information report; and

a second delay associated with the second information report, where the second delay is associated with an end time of reception of triggering signaling for the second information report; where

the second information report is information obtained based on AI processing, the first processing unit is configured for information computation, the second processing unit is configured for AI model-related processing, and the third processing unit is configured for information computation and AI model-related processing.

This network-side device embodiment corresponds to the foregoing network-side device method embodiment, and each implementation process and implementation of the foregoing method embodiment can be applied to this network-side device embodiment, with the same technical effects achieved.

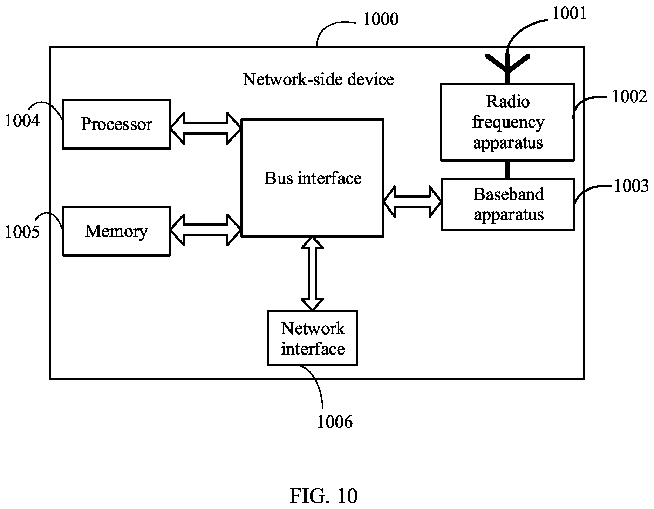

Specifically, an embodiment of this application further provides a network-side device. As shown in FIG. 10, the network-side device 1000 includes: an antenna 1001, a radio frequency apparatus 1002, a baseband apparatus 1003, a processor 1004, and a memory 1005. The antenna 1001 is connected to the radio frequency apparatus 1002. In an uplink direction, the radio frequency apparatus 1002 receives information via the antenna 1001, and sends the received information to the baseband apparatus 1003 for processing. In a downlink direction, the baseband apparatus 1003 processes to-be-sent information, and sends the information to the radio frequency apparatus 1002; and the radio frequency apparatus 1002 processes the received information and then sends the information out via the antenna 1001.

The method executed by the network-side device in the foregoing embodiments can be implemented in the baseband apparatus 1003, and the baseband apparatus 1003 includes a baseband processor.

The baseband apparatus 1003 may include, for example, at least one baseband board, where a plurality of chips are disposed on the baseband board. As shown in FIG. 10, one of the chips is, for example, the baseband processor, and connected to the memory 1005 via a bus interface, to invoke the program in the memory 1005 to perform the operations of the network-side device shown in the foregoing method embodiment.

The network-side device may further include a network interface 1006. The network interface is, for example, a common public radio interface (common public radio interface, CPRI).

Specifically, the network-side device 1000 in this embodiment of this application further includes: instructions or a program stored on the memory 1005 and capable of running on the processor 1004. The processor 1004 calls the instructions or program in the memory 1005 to execute the method executed by the modules shown in FIG. 7, with the same technical effects achieved. To avoid repetition, details are not described herein.

An embodiment of this application further provides a readable storage medium, where the readable storage medium stores a program or instructions. When the program or instructions are executed by a processor, various processes of the foregoing information reporting method embodiments are implemented, or various processes of the foregoing information reporting configuration method embodiments are implemented, with the same technical effects achieved. To avoid repetition, details are not described herein.

The processor is a processor in the terminal described in the foregoing embodiment. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip, where the chip includes a processor and a communication interface. The communication interface is coupled with the processor, and the processor is configured to run a program or instructions to implement various processes of the foregoing information reporting method embodiments, or to implement various processes of the foregoing information reporting configuration method embodiments, with the same technical effects achieved. To avoid repetition, details are not described herein.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement various processes of the foregoing information reporting method embodiments, or to implement various processes of the foregoing information reporting configuration method embodiments, with the same technical effects achieved. To avoid repetition, details are not described herein.

An embodiment of this application further provides an information reporting system, including a terminal and a network-side device. The terminal is configured to perform various processes of the information reporting method described in FIG. 2 and the foregoing method embodiments, and the network-side device is configured to perform various processes of the information reporting configuration method described in FIG. 5 and the foregoing method embodiments, with the same technical effects achieved. To avoid repetition, details are not described herein.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by software with a necessary general hardware platform. Certainly, the method in the foregoing embodiment may also be implemented by hardware. The computer software product is stored in a storage medium (such as a ROM, a RAM, a magnetic disk, or an optical disc), and includes several instructions for instructing a terminal or a network-side device to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. An information reporting method, comprising:

    sending, by a terminal, first information to a network-side device;
    receiving, by the terminal, a report configuration from the network-side device, wherein the report configuration is associated with the first information; and
    reporting or not reporting, by the terminal, a first information report based on the report configuration, wherein the first information report comprises information obtained based on artificial intelligence AI processing; wherein the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, wherein the first delay is associated with an end time of measurement resources corresponding to the second information report; and
a second delay associated with the second information report, wherein the second delay is associated with an end time of reception of triggering signaling for the second information report; wherein
the second information report is information obtained based on AI processing, the first information report belongs to the second information report, the first processing unit is configured for information computation, the second processing unit is configured for AI model-related processing, and the third processing unit is configured for information computation and AI model-related processing.

2. The method according to claim 1, wherein the reporting or not reporting, by the terminal, a first information report based on the report configuration comprises:
in a case that at least one of the following is satisfied, not updating, by the terminal, the first information report, or not reporting, by the terminal, the first information report:

the number of first processing units available in the terminal is less than the number of first processing units required to generate the first information report;
the number of second processing units available in the terminal is less than the number of second processing units required to generate the first information report; and
the number of third processing units available in the terminal is less than the number of third processing units required to generate the first information report; wherein
the number of first processing units, second processing units, or third processing units required to generate the first information report is determined based on the report configuration.

3. The method according to claim 2, wherein the number of first processing units required to generate the first information report is determined based on second information indicated by the report configuration, wherein the second information comprises at least one of the following:

aperiodic measurement resource related information;
AI functionality or AI model related configuration information;
first indication information, used for indicating a report quantity of channel state information CSI report, wherein the first information report is a CSI report; and
second indication information, used for indicating a codebook type associated with CSI reporting, wherein the first information report is a CSI report;
or
the number of second processing units required to generate the first information report is determined based on third information indicated by the report configuration, wherein the third information comprises at least one of the following:

aperiodic measurement resource related information;
AI functionality or AI model related configuration information;
indication information used for indicating an AI functionality;
an AI model identifier;
a dataset identifier, wherein a dataset identified by the dataset identifier is an AI functionality or AI model related dataset;
indication information used for indicating a lifecycle stage of an AI model or an AI functionality; and
indication information used for indicating a monitoring indicator of an AI model.

4. The method according to claim 3, wherein the number of first processing units required to generate the first information report is determined based on the second information and fourth information, wherein the fourth information comprises at least one of the following:

> the number of AI models used for an AI functionality;
> a first coefficient, wherein the first coefficient is related to a capability of the terminal; and
> AI functionality or AI model related configuration information;
> or
> the number of second processing units required to generate the first information report is determined based on the third information and fifth information, wherein the fifth information comprises at least one of the following:

>> the number of AI models used for an AI functionality;
>> a second coefficient, wherein the second coefficient is related to a capability of the terminal;
>> AI functionality or AI model related configuration information;
>> indication information used for indicating an AI functionality;
>> an AI model identifier; and
>> a dataset identifier, wherein a dataset identified by the dataset identifier is an AI functionality or AI model related dataset.

5. The method according to claim 4, wherein the number of first processing units required to generate the first information report is calculated based on the following formula:

$$O_1 = y * L_1$$

wherein $O_1$ represents the number of first processing units required to generate the first information report, y represents the first coefficient, and $L_1$ represents a first factor, wherein the first factor is determined based on the second information, or the first factor is determined based on information, other than the first coefficient, in the second information and the third information.

6. The method according to claim 2, wherein the number of third processing units required to generate the first information report is determined based on sixth information indicated by the report configuration, wherein the sixth information comprises at least one of the following:

> indication information used for indicating an AI functionality;
> an AI model identifier;
> AI functionality or AI model related configuration information;
> a dataset identifier, wherein a dataset identified by the dataset identifier is an AI functionality or AI model related dataset;
> indication information used for indicating a lifecycle stage of an AI model or an AI functionality;
> indication information used for indicating a monitoring indicator of an AI model; and
> aperiodic measurement resource related information.

7. The method according to claim 6, wherein the number of third processing units required to generate the first information report is determined based on the sixth information and seventh information, and the seventh information comprises at least one of the following:

> the number of AI models used for an AI functionality;
> a first coefficient, wherein the first coefficient is related to a capability of the terminal;
> a second coefficient, wherein the second coefficient is related to a capability of the terminal;
> a third coefficient, wherein the third coefficient is related to a capability of the terminal;
> indication information used for indicating an AI functionality;
> an AI model identifier;
> AI functionality or AI model related configuration information; and
> a dataset identifier, wherein a dataset identified by the dataset identifier is an AI functionality or AI model related dataset.

8. The method according to claim 6 or 7, wherein the number of third processing units required to generate the first information report is determined based on one of the following formulas:

$$O_2 = N_1 + N_2;$$

$$O_2 = N_1 * k_1;$$

$$O_2 = N_1 * k_1 + N_2;$$

$$O_2 = N_1{}^{k_1};$$

$$O_2 = N_1{}^{k_1} + N_2;$$

$$O_2 = N_2 * k_2;$$

$$O_2 = N_2 * k_2 + N_1;$$

$$O_X = N_2{}^{k_2};$$

$$O_2 = N_2{}^{k_2} + N_1;$$

$$O_2 = N_2 * k_2 + N_1 * k_1;$$

and

$$O_2 = k_2(N_2 + N_1);$$

wherein

$O_2$ represents the number of third processing units required to generate the first information report; $N_1$ represents a second factor, wherein the second factor is related to the number of first processing units required to generate the first information report; $N_2$ represents a third factor, wherein the third factor is related to the number of second processing units required to generate the first information report; and $k_1$ represents a third coefficient, $k_2$ represents a second coefficient, and the second coefficient and the third coefficient are each related to a capability of the terminal;
the second factor is determined based on at least one of the following:

aperiodic measurement resource related information;
AI functionality or AI model related configuration information; and
a first coefficient, wherein the first coefficient is related to a capability of the terminal; and
the third factor is determined based on at least one of the following:

indication information used for indicating an AI functionality;
an AI model identifier;
AI functionality or AI model related configuration information;
a dataset identifier, wherein a dataset identified by the dataset identifier is an AI functionality or AI model related dataset;
indication information used for indicating a lifecycle stage of an AI model or an AI functionality;
indication information used for indicating a monitoring indicator of an AI model; and
aperiodic measurement resource related information.

9.  The method according to any one of claims 1 to 8, wherein the first information comprises eighth information, wherein the eighth information is used to determine the number of first processing units, second processing units, or third processing units required to generate the second information report; and
    the eighth information comprises at least one of the following:

    AI functionality or AI model related configuration information;
    the number of AI models used for an AI functionality;
    indication information used for indicating an AI functionality;
    an AI model identifier;
    a dataset identifier, wherein a dataset identified by the dataset identifier is an AI functionality or AI model related dataset;
    indication information used for indicating a lifecycle stage of an AI model or an AI functionality;
    indication information used for indicating a monitoring indicator of an AI model;
    a first coefficient, wherein the first coefficient is related to a capability of the terminal;
    a second coefficient, wherein the second coefficient is related to a capability of the terminal; and
    a third coefficient, wherein the third coefficient is related to a capability of the terminal.

10. The method according to any one of claims 1 to 9, wherein the occupation duration of the second processing unit or the third processing unit is determined based on at least one of the following:

    a first occupation duration, wherein the first occupation duration is an occupation duration of the first processing unit;
    AI functionality or AI model activation signaling;
    AI functionality or AI model deactivation signaling;
    AI functionality or AI model switching signaling;
    a start time of input data collection associated with an AI functionality or an AI model;
    an end time of output data report associated with an AI functionality or an AI model;
    a measurement resource associated with an AI functionality or an AI model; and
    triggering signaling of the first information report.

11. The method according to any one of claims 1 to 10, wherein the reporting or not reporting, by the terminal, a first information report based on the report configuration comprises:
    in a case that any one of the following is satisfied, not updating, by the terminal, the first information report, or not reporting, by the terminal, the first information report:

    a time of reporting the first information report starts earlier than a first time; and
    the time of reporting the first information report starts earlier than a second time; wherein
    the reporting time of the first information report is determined based on the report configuration; the first time is determined based on a first reference time and a first delay associated with the first information report, and the first reference time is an end time of measurement resources corresponding to the first information report; and the second time is determined based on a second reference time and a second delay associated with the first information report reporting, and the second reference time is an end time of reception of triggering signaling for the first information report by the terminal.

12. The method according to claim 11, wherein the first delay associated with the first information report is determined based on a third delay associated with the first information report and a fourth delay associated with the first information report, wherein the third delay associated with the first information report is a first computation delay associated with the first reference time, the first computation delay is a delay used for information computation, the fourth delay associated with the first information report is a first AI processing delay associated with the first reference time, and the first AI processing delay is a delay used for AI model-related processing;
    or
    the second delay associated with the first information report is determined based on a fifth delay associated with the first information report and a sixth delay associated with the first information report, wherein the fifth delay associated with the first information report is a second computation delay associated with the second reference time, the second computation delay is a delay used for information computation, the sixth delay is a second AI processing delay associated with the second reference time, and the second AI processing delay is a delay used for AI model-related processing.

**13.** The method according to claim 12, wherein a first target delay is calculated according to one of the following formulas:

$$t_\alpha = t_\beta + t_\gamma;$$

$$t_\alpha = t_\beta * t_\gamma;$$

and

$$t_\alpha = t_\beta{}^{t_\gamma};$$

wherein

$t_\alpha$ represents the first target delay; and in a case that the first target delay is the first delay associated with the first information report, $t_\beta$ represents the third delay associated with the first information report, and $t_\gamma$ represents the fourth delay associated with the first information report; or in a case that the target delay is the second delay associated with the first information report, $t_\beta$ represents the fifth delay associated with the first information report, and $t_\gamma$ represents the sixth delay associated with the first information report.

**14.** The method according to any one of claims 1 to 10, wherein the reporting or not reporting, by the terminal, a first information report based on the report configuration comprises:
in a case that any one of the following is satisfied, not updating, by the terminal, the first information report, or not reporting, by the terminal, the first information report:

a time of reporting the first information report starts earlier than a first time;
a time of reporting the first information report starts earlier than a second time;
a time of reporting the first information report starts earlier than a third time; and
a time of reporting the first information report starts earlier than a fourth time; wherein
the reporting time of the first information report is determined based on the report configuration, the first time is determined based on a first reference time and a first delay associated with the first information report, the second time is determined based on a second reference time and a second delay associated with the first information report, the third time is determined based on the first reference time and a seventh delay associated with the first information report, and the fourth time is determined based on the second reference time and an eighth delay associated with the first information report;
the first reference time is an end time of measurement resources corresponding to the first information report, and the second reference time is an end time of reception of triggering signaling for the first information report by the terminal;
the first delay associated with the first information report comprises a first AI processing delay associated with the first reference time, and the first AI processing delay is a delay used for AI model-related processing;
the second delay associated with the first information report comprises a second AI processing delay associated with the second reference time, and the second AI processing delay is a delay used for AI model-related processing;
the seventh delay associated with the first information report comprises a first computation delay associated with the first reference time, and the first computation delay is a delay used for information computation; and
the eighth delay associated with the first information report comprises a second computation delay associated with the second reference time, and the second computation delay is a delay used for information computation.

**15.** The method according to any one of claims 12 to 14, wherein the first information comprises third indication information or fourth indication information, wherein the third indication information is used to indicate a second target delay, and the second target delay comprises a fourth delay associated with the second information report or a sixth delay associated with the second information report; and the fourth indication information is used to indicate a third target delay, and the third target delay comprises a first delay associated with the second information report or a second delay associated with the second information report.

**16.** The method according to claim 15, wherein the third indication information comprises at least one first delay mapping relationship, wherein the first delay mapping relationship is a mapping relationship between ninth information and the second target delay; and

the ninth information comprises at least one of the following:

indication information used for indicating an AI functionality;
an AI model identifier;
a dataset identifier, wherein a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model;
or
the fourth indication information comprises at least one second delay mapping relationship, wherein the second delay mapping relationship is a mapping relationship between tenth information and the third target delay; and the tenth information comprises at least one of the following:

indication information used for indicating an AI functionality;
an AI model identifier;
a dataset identifier, wherein a dataset identified by the dataset identifier is an AI functionality or AI model related dataset;
AI functionality or AI model related configuration information;
indication information used for indicating a lifecycle stage of an AI model; and
indication information used for indicating a monitoring indicator of an AI model.

17. The method according to claim 3, 4, 6, 7, 8, 9 or 16, wherein the AI functionality or AI model related configuration information comprises at least one of the following:

the number of first sets;
the number of reference signal resources associated with the first set;
the number of time instances associated with the first set;
the number of subbands associated with the first set;
the number of ports associated with the first set;
the number of beams associated with the first set;
the number of second sets;
the number of reference signals associated with the second set;
the number of beams associated with the second set;
the number of time instances associated with the second set;
the number of frequency domain units associated with the second set;
the number of subbands associated with the second set; and
the number of ports associated with the second set; wherein
the first set is a set corresponding to input of an AI model, and the second set is a set corresponding to output of the AI model.

18. The method according to any one of claims 1 to 17, wherein the first information comprises eleventh information, wherein the eleventh information is used to determine the maximum number of active resources that the terminal is able to support per unit time.

19. The method according to claim 18, wherein in a case that the second information report comprises beam prediction-related information, the eleventh information comprises one of the following:

the number of beams of the first set per unit time and the total number of active resources;
the number of reference signal resources of the first set per unit time and the total number of active resources;
the number of beams of the first set per unit time; and
the number of reference signal resources of the first set per unit time; wherein
the first set is a set corresponding to input of an AI model;
or
in a case that the second information report comprises CSI prediction-related information or CSI compression-related information, the eleventh information comprises at least one of the number of reference signal resources associated with the first set and the number of ports associated with the first set; wherein
the first set is a set corresponding to input of an AI model.

**20.** An information reporting configuration method, comprising:

receiving, by a network-side device, first information from a terminal; and

sending, by the network-side device, a report configuration to the terminal, wherein the report configuration is associated with the first information; wherein

the first information is used to determine at least one of the following:

the number of first processing units required to generate a second information report;

the number of first processing units available in the terminal;

the number of second processing units required to generate the second information report;

the number of second processing units available in the terminal;

the number of third processing units required to generate the second information report;

the number of third processing units available in the terminal;

an occupation duration of the second processing unit;

an occupation duration of the third processing unit;

the maximum number of active resources that the terminal is able to support per unit time;

a first delay associated with the second information report, wherein the first delay is associated with an end time of measurement resources corresponding to the second information report; and

a second delay associated with the second information report, wherein the second delay is associated with an end time of reception of triggering signaling for the second information report; wherein

the second information report is information obtained based on AI processing, the first processing unit is configured for information computation, the second processing unit is configured for AI model-related processing, and the third processing unit is configured for information computation and AI model-related processing.

**21.** The method according to claim 20, wherein the first information comprises eighth information, and the eighth information is used to determine the number of first processing units, second processing units, or third processing units required to generate the second information report; wherein

the eighth information comprises at least one of the following:

AI functionality or AI model related configuration information;

the number of AI models used for an AI functionality;

indication information used for indicating an AI functionality;

an AI model identifier;

a dataset identifier, wherein a dataset identified by the dataset identifier is an AI functionality or AI model related dataset;

indication information used for indicating a lifecycle stage of an AI model or an AI functionality;

indication information used for indicating a monitoring indicator of an AI model;

a first coefficient, wherein the first coefficient is related to a capability of the terminal;

a second coefficient, wherein the second coefficient is related to a capability of the terminal; and

a third coefficient, wherein the third coefficient is related to a capability of the terminal.

**22.** The method according to claim 21, wherein the AI functionality or AI model related configuration information comprises at least one of the following:

the number of first sets;

the number of reference signal resources associated with the first set;

the number of time instances associated with the first set;

the number of subbands associated with the first set;

the number of ports associated with the first set;

the number of beams associated with the first set;

the number of second sets;

the number of reference signals associated with the second set;

the number of beams associated with the second set;

the number of time instances associated with the second set;

the number of frequency domain units associated with the second set;

the number of subbands associated with the second set; and

the number of ports associated with the second set; wherein

the first set is a set corresponding to input of an AI model, and the second set is a set corresponding to output of the AI model.

23. The method according to any one of claims 20 to 22, wherein the first information comprises third indication information or fourth indication information; wherein

the third indication information is used to indicate a second target delay, wherein the second target delay comprises a fourth delay associated with the second information report or a sixth delay associated with the second information report, the fourth delay associated with the second information report is a first AI processing delay associated with an end time of measurement resources corresponding to the second information report, the first AI processing delay is a delay used for AI model-related processing, the fourth delay associated with the second information report is used to determine the first delay associated with the second information report, the sixth delay associated with the second information report is a second AI processing delay associated with an end time of reception of triggering signaling for the second information report, the second AI processing delay is a delay used for AI model-related processing, and the sixth delay associated with the second information report is used to determine the second delay associated with the second information report; and
the fourth indication information is used to indicate a third target delay, wherein the third target delay comprises a first delay associated with the second information report or a second delay associated with the second information report, the first delay associated with the second information report comprises a first AI processing delay associated with an end time of measurement resources corresponding to the second information report, the first AI processing delay is a delay used for AI model-related processing, the second delay associated with the second information report comprises a second AI processing delay associated with an end time of reception of triggering signaling for the second information report, and the second AI processing delay is a delay used for AI model-related processing.

24. The method according to any one of claims 20 to 23, wherein the occupation duration of the second processing unit or the third processing unit is determined based on at least one of the following:

a first occupation duration, wherein the first occupation duration is an occupation duration of the first processing unit;
AI functionality or AI model activation signaling;
AI functionality or AI model deactivation signaling;
AI functionality or AI model switching signaling;
a start time of input data collection associated with an AI functionality or an AI model;
an end time of output data report associated with an AI functionality or an AI model;
a measurement resource associated with an AI functionality or an AI model; and
triggering signaling of the first information report.

25. An information reporting apparatus, comprising:

a first sending module configured to send first information to a network-side device;
a first receiving module configured to receive a report configuration from the network-side device, wherein the report configuration is associated with the first information; and
a reporting module configured to report or not report a first information report based on the report configuration, wherein the first information report comprises information obtained based on artificial intelligence AI processing; wherein
the first information is used to determine at least one of the following:

the number of first processing units required to generate a second information report;
the number of first processing units available in the terminal;
the number of second processing units required to generate the second information report;
the number of second processing units available in the terminal;
the number of third processing units required to generate the second information report;
the number of third processing units available in the terminal;
an occupation duration of the second processing unit;
an occupation duration of the third processing unit;
the maximum number of active resources that the terminal is able to support per unit time;
a first delay associated with the second information report, wherein the first delay is associated with an end time of measurement resources corresponding to the second information report; and

a second delay associated with the second information report, wherein the second delay is associated with an end time of reception of triggering signaling for the second information report; wherein

the second information report is information obtained based on AI processing, the first information report belongs to the second information report, the first processing unit is configured for information computation, the second processing unit is configured for AI model-related processing, and the third processing unit is configured for information computation and AI model-related processing.

26. An information reporting configuration apparatus, comprising:

a second receiving module configured to receive first information from a terminal;

a second sending module configured to send a report configuration to the terminal, wherein the report configuration is associated with the first information; wherein

the first information is used to determine at least one of the following:

the number of first processing units required to generate a second information report;

the number of first processing units available in the terminal;

the number of second processing units required to generate the second information report;

the number of second processing units available in the terminal;

the number of third processing units required to generate the second information report;

the number of third processing units available in the terminal;

an occupation duration of the second processing unit;

an occupation duration of the third processing unit;

the maximum number of active resources that the terminal is able to support per unit time;

a first delay associated with the second information report, wherein the first delay is associated with an end time of measurement resources corresponding to the second information report; and

a second delay associated with the second information report, wherein the second delay is associated with an end time of reception of triggering signaling for the second information report; wherein

the second information report is information obtained based on AI processing, the first processing unit is configured for information computation, the second processing unit is configured for AI model-related processing, and the third processing unit is configured for information computation and AI model-related processing.

27. A terminal, comprising a processor and a memory, wherein the memory stores a program or instructions capable of running on the processor, and the program or instructions, when executed by the processor, implement the steps of the information reporting method according to any one of claims 1 to 19.

28. A network-side device, comprising a processor and a memory, wherein the memory stores a program or instructions capable of running on the processor, and the program or instructions, when executed by the processor, implement the steps of the information reporting configuration method according to any one of claims 20 to 24.

29. A readable storage medium, wherein the readable storage medium stores a program or instructions, and the program or instructions, when executed by a processor, implement the steps of the information reporting method according to any one of claims 1 to 19, or implement the steps of the information reporting configuration method according to any one of claims 20 to 24.

Network-side
device

11

Terminal

11

Terminal

FIG. 1

| | |
|---|---|
| A terminal sends first information to a network-side device | 201 |
| The terminal receives a reporting configuration from the network-side device, where the reporting configuration is associated with the first information | 202 |
| The terminal reports or does not report a first information report based on the reporting configuration | 203 |

FIG. 2

Reporting
time

| PDCCH |

First delay

| Measurement
resource |

Second delay

FIG. 3

Reporting
time

Seventh delay

| PDCCH |

First delay

Eighth delay

| Measurement
resource |

Second delay

FIG. 4

A network-side device receives first information from a
terminal

501

The network-side device sends a report configuration to the
terminal, where the report configuration is associated with
the first information

502

FIG. 5

600

Information
reporting apparatus

First sending module — 601

First receiving
module — 602

Reporting module — 603

FIG. 6

700

Information reporting
configuration apparatus

Second receiving
module — 701

Second sending
module — 702

FIG. 7

800

Communication device

801  Processor ⟷ Memory  802

FIG. 8

900

901 Radio frequency unit

Network module  902

910

909 Memory
Application program
Operating system

Audio output unit  903

904

Input unit
Graphics processing unit  9041
Microphone  9042

908 Interface unit

Processor

907

User input unit
9071 Touch panel
9072 Other input devices

906

Display unit  9061
Display panel

Sensor  905

FIG. 9

FIG. 10

**Revised ISR**

## INTERNATIONAL SEARCH REPORT

| International application No. |
| --- |
| **PCT/CN2024/119920** |

| A. | CLASSIFICATION OF SUBJECT MATTER |
| --- | --- |

H04W 16/06(2009.01)i

According to International Patent Classification (IPC) or to both national classification and IPC

| B. | FIELDS SEARCHED |
| --- | --- |

Minimum documentation searched (classification system followed by classification symbols)

IPC: H04W; H04Q; H04L

Documentation searched other than minimum documentation to the extent that such documents are included in the fields searched

Electronic data base consulted during the international search (name of data base and, where practicable, search terms used)

CNTXT; WPABS; WPABSC; ENTXT; ENTXTC; 3GPP; CJFD; IEEE; CNKI; CNABS: 人工智能; AI; 终端; 网络; 能力; 上报; 配置; 单元, 个数; 激活, 资源; 占用, 时间; 时延; 模型; 信道状态信息,; CSI; 标识; artificial intelligence; terminal; network; capabilities; reporting; configuration; unit, number; activation, resource; occupancy, time; latency; model; channel state information; identification

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 2023164817 A1 (LENOVO (SINGAPORE) PTE. LTD.) 25 May 2023 (2023-05-25) see description, paragraphs [0012]-[0096] | 1, 20, 25-29 |
| A | CN 114095969 A (HUAWEI TECHNOLOGIES CO., LTD.) 25 February 2022 (2022-02-25) entire document | 1-29 |
| A | CN 115913486 A (VIVO COMMUNICATION TECHNOLOGY CO., LTD.) 04 April 2023 (2023-04-04) entire document | 1-29 |
| A | WO 2023168718 A1 (BEIJING XIAOMI MOBILE SOFTWARE CO., LTD.) 14 September 2023 (2023-09-14) entire document | 1-29 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **24 October 2024** | **06 April 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/119920**

| Patent document cited in search report | | | Publication date (day/month/year) | Patent family member(s) | | | Publication date (day/month/year) |
|---|---|---|---|---|---|---|---|
| US | 2023164817 | A1 | 25 May 2023 | EP | 4437745 | A1 | 02 October 2024 |
| | | | | WO | 2023096959 | A1 | 01 June 2023 |
| | | | | GB | 202409024 | D0 | 07 August 2024 |
| | | | | GB | 2628271 | A | 18 September 2024 |
| CN | 114095969 | A | 25 February 2022 | None | | | |
| CN | 115913486 | A | 04 April 2023 | None | | | |
| WO | 2023168718 | A1 | 14 September 2023 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311272466